# EUROPEAN PATENT APPLICATION

(11) **EP 4 648 495 A1**
(43) Date of publication of application: **12.11.2025**
(21) Application number: 24810430.9
(22) Date of filing: 22.05.2024
(51) Int. Cl.: H04W 52/02

(54) **NEAR-FIELD SCANNING METHOD AND RELATED APPARATUS**

(30) Priority: 25.05.2023 CN 202310605017
(71) Applicant: Huawei Technologies Co., Ltd., Shenzhen, Guangdong 518129 (CN)
(72) Inventor: XIA, Ri, Shenzhen, Guangdong 518129 (CN); DONG, Lei, Shenzhen, Guangdong 518129 (CN); MA, Zhenmin, Shenzhen, Guangdong 518129 (CN); HU, Shibang, Shenzhen, Guangdong 518129 (CN); LIU, Zheng, Shenzhen, Guangdong 518129 (CN)
(74) Representative: Goddar, Heinz J.
(86) International application number: PCT/CN2024/094752
(87) International publication number: WO 2024/240191

(57) **Abstract**

This application discloses a short-range scanning method and a related apparatus. The method is applied to a first electronic device, and the first electronic device includes a first short-range communication module, a main processor, and a second processor. The method includes: The main processor sends a first instruction to the second processor, where the first instruction instructs the second processor to perform packet filtering based on a first filter condition, the first filter condition is used to filter a packet from a device of a first service, and the device of the first service includes a first device; the first short-range communication module obtains, through scanning, a first packet sent by the first device; the first short-range communication module sends the first packet to the second processor; and when the second processor determines that the first packet matches the first filter condition in the second processor, the second processor sends the first packet to the main processor. This can prevent the main processor from being invalidly woken up, thereby effectively reducing device power consumption.

## Description

This application claims priority to Chinese Patent Application No. 202310605017.9, filed with the China National Intellectual Property Administration on May 25, 2023 and entitled "SHORT-RANGE SCANNING METHOD AND RELATED APPARATUS", which is incorporated herein by reference in its entirety.

### TECHNICAL FIELD

This application relates to the field of electronic technologies, and in particular, to a short-range scanning method and a related apparatus.

### BACKGROUND

With continuous development of short-range communication technologies, a short-range communication technology (for example, Bluetooth) for an electronic device is increasingly widely applied in life of a user. The short-range communication technology for an electronic device may be applied to various scenarios such as smart home, office, automobile, and payment, to bring convenience to the user.

Bluetooth is used as an example. A Bluetooth device may continuously broadcast a Bluetooth signal, to be discovered by another device. An electronic device of the user may scan for a Bluetooth packet sent by a surrounding Bluetooth device, and a main processor of the electronic device implements a related service based on the Bluetooth packet obtained through scanning.

However, in actual application, there may be a large quantity of irrelevant Bluetooth devices around the electronic device, and the electronic device obtains a large quantity of Bluetooth packets through scanning. Consequently, the main processor of the electronic device is invalidly woken up a large quantity of times, resulting in high device power consumption.

### SUMMARY

This application provides a short-range scanning method and a related apparatus, to prevent a main processor from being invalidly woken up, thereby effectively reducing device power consumption.

According to a first aspect, this application provides a short-range scanning method, applied to a first electronic device. The first electronic device includes a first short-range communication module, a main processor, and a second processor. The method includes: The main processor sends a first instruction to the second processor, where the first instruction instructs the second processor to perform packet filtering based on a first filter condition, the first filter condition is used to filter a packet from a device of a first service, and the device of the first service includes a first device; the first short-range communication module obtains, through scanning, a first packet sent by the first device; the first short-range communication module sends the first packet to the second processor; and when the second processor determines that the first packet matches a first filter condition in the second processor, the second processor sends the first packet to the main processor.

During implementation of this embodiment of this application, the short-range communication module sends the packet obtained through scanning to the second processor with low power consumption, and the second processor filters the packet of the first service, and sends only a packet of the first service obtained through filtering to the main processor. Packet filtering implemented by the second processor does not need to wake up the main processor. This can prevent a packet of an irrelevant device from waking up the main processor, thereby effectively reducing device power consumption. In addition, in comparison with a case in which a filter is set in the short-range communication module to implement packet filtering, when the second processor implements packet filtering at a software layer, a quantity of services that can be supported is far greater than that of the short-range communication module. This improves a service processing capability of the electronic device.

In an implementation, the method further includes: The first short-range communication module obtains, through scanning, a second packet sent by a second device; the first short-range communication module sends the second packet to the second processor; and when the second processor determines that the second packet does not match the first filter condition in the second processor, the second processor does not send the first packet to the main processor. During implementation of this embodiment of this application, a packet that does not match the filter condition of the first service determined by the second processor is not sent to the main processor. This can prevent a packet of an irrelevant device from waking up the main processor, thereby effectively reducing device power consumption.

In an implementation, the method further includes: The second processor sends a second instruction to the first short-range communication module based on the first instruction, where the second instruction instructs the first short-range communication module to send the packet obtained through scanning to the second processor. According to a conventional implementation solution, the short-range communication module directly sends the packet obtained through scanning to the main processor. During implementation of this embodiment of this application, the second processor indicates the short-range communication module to switch a callback path of the packet to the second processor. In this way, the second processor may perform packet filtering, and send only a packet that matches the filter condition to the main processor, to prevent a packet of an irrelevant device from waking up the main processor, thereby effectively reducing device power consumption.

In an implementation, the method further includes: The second processor sends a second instruction to the first short-range communication module based on the first instruction, where the second instruction instructs the first short-range communication module to send a packet of a first-type service obtained through scanning to the second processor, and the first service belongs to the first-type service. According to a conventional implementation solution, the short-range communication module directly sends the packet of the first-type service obtained through scanning to the main processor. The first-type service includes a plurality of services, and the first electronic device subscribes to only a part of the services (for example, the first service). During implementation of this embodiment of this application, the main processor delivers a filter condition corresponding to a subscribed service to the second processor, and the second processor indicates the short-range communication module to switch a callback path of the first-type service to the second processor. In this way, the second processor may filter the packet of the first-type service, and send only a packet that is of the device of the first service and that matches the filter condition to the main processor, to prevent a packet of a device that is of the first-type service and that does not subscribe to the service from waking up the main processor, thereby effectively reducing device power consumption.

In an implementation, before the first short-range communication module sends the first packet to the second processor, the method further includes: The main processor sends a second filter condition to the first short-range communication module, where the second filter condition is used to filter the packet from the device of the first-type service. That the first short-range communication module sends the first packet to the second processor includes: The first short-range communication module sends the first packet to the second processor when determining that the first packet meets the second filter condition. During implementation of this embodiment of this application, the short-range communication module preliminarily obtains, through filtering, the packet of the first-type service from the packet obtained through scanning, and sends the packet of the first-type service to the second processor. In this way, a packet of another type of service cannot be sent to the second processor, and power consumption of the second processor is reduced.

In an implementation, before the second processor sends the first packet to the main processor, the method further includes: The main processor sends a callback condition to the second processor, where the callback condition indicates the second processor to send the first packet to the main processor when the first packet meets the callback condition. During implementation of this embodiment of this application, the second processor controls, based on the callback condition, a frequency at which packets of a same device are called back to the main processor. This can reduce a frequency of waking up the main processor and prevent the main processor from repeatedly processing a same packet, so that power consumption can be controlled.

In an implementation, the callback condition of the first packet includes any one of the following: The first packet is received for the first time; or the first packet is not received for the first time, and a time interval between a time at which the first packet is received this time and a time at which the first packet sent to the main processor most recently is received is greater than a first time threshold.

In an implementation, the first packet includes a device identifier of the first device, and the method further includes: The main processor obtains, from a server based on the device identifier of the first device, a first message attachment associated with the first device; and a first application on the main processor performs a first preset function based on message content in the first message attachment. The first preset function corresponding to the first service is not specifically limited in this embodiment of this application. For example, push information is output based on the message content.

In an implementation, the first packet includes a device identifier of the first device, and the method further includes: The main processor performs a second preset function based on the device identifier of the first device. The second preset function is not specifically limited in this embodiment of this application. For example, an instruction is sent to a vehicle through a vehicle APP, to control the vehicle to open a door.

In an implementation, after the second processor sends the first packet to the main processor, the method further includes: The second processor detects that the packet of the first device is not received again within first preset duration after the packet of the first device is received, and the second processor sends a loss event of the first device to the main processor. During implementation of this embodiment of this application, an AP does not need to remain in an active state, and the loss event can be detected through a timer function of the second processor. Compared with the main processor, the second processor consumes less power consumption for detecting the loss event.

In an implementation, the first short-range communication module is a Bluetooth chip, the first service is a first beacon scanning service of the first application, and the first device is a registered beacon device of the first beacon scanning service. In actual application, there may be a beacon device that does not subscribe to a beacon scanning service around the first electronic device, and a large quantity of beacon packets that are sent by the beacon device and that are irrelevant to the beacon device may be obtained through scanning. The second processor filters the beacon packet obtained through scanning by the Bluetooth chip, only calls back, to the main processor for further processing, a beacon packet that is of a device that has subscribed to the service and that is obtained through filtering, and discards another irrelevant beacon packet. This can prevent an irrelevant beacon packet from waking up the main processor, thereby effectively reducing device power consumption. In addition, a quantity of beacon scanning services that can be supported is far greater than that of the Bluetooth chip. This improves a service processing capability of the electronic device.

In an implementation, the method further includes: The main processor sends a first request message to the server, where the first request message carries a beacon parameter of the first beacon scanning service, and the first request message is used to detect validity of the beacon parameter; and when the beacon parameter is valid, the main processor receives a first response message sent by the server, where the first response message carries the first filter condition.

In an implementation, the second filter condition includes that the packet carries a beacon device type.

In an implementation, the device identifier of the first device includes a first beacon ID, a cloud server stores one or more message attachments associated with the first beacon ID; and that the main processor obtains, from the server based on the device identifier of the first device, a first message attachment associated with the first device includes: The main processor sends a second request message to the server, where the second request message includes the first beacon ID, and the second request message is used to query for the message attachment associated with the first beacon ID; and the main processor receives the first message attachment sent by the server, where the first message attachment is any one of the one or more message attachments.

In an implementation, the first filter condition indicates a value of one or more of the following filter fields of the first beacon scanning service: a namespace, a message type, a beacon ID prefix, and message content. That the first packet matches the first filter condition includes: The first packet carries a first filter field, the first filter field carried in the first packet matches the first filter field indicated by the first filter condition, and the first filter field is any filter field indicated by the first filter condition.

In an implementation, the device identifier of the first device includes the first beacon ID, and the first application stores a correspondence between the first beacon ID and the second preset function. That the main processor performs the second preset function based on the device identifier of the first device includes: The first application on the main processor performs, based on the correspondence, the second preset function corresponding to the first beacon ID.

In an implementation, the first filter condition indicates the first beacon ID of the first device. That the first packet matches the first filter condition includes: A beacon ID carried in the first packet is the first beacon ID.

According to a second aspect, this application provides an electronic device, including one or more processors and one or more memories. The one or more memories are coupled to the one or more processors. The one or more memories are configured to store computer program code. The computer program code includes computer instructions. When the one or more processors execute the computer instructions, the electronic device is enabled to perform the short-distance scanning method in any possible implementation of any one of the foregoing aspects.

According to a third aspect, an embodiment of this application provides a computer storage medium, including computer instructions. When the computer instructions are run on an electronic device, the electronic device is enabled to perform the short-distance scanning method in any possible implementation of any one of the foregoing aspects.

According to a fourth aspect, an embodiment of this application provides a computer program product. When the computer program product runs on a computer, the computer is enabled to perform the short-distance scanning method in any possible implementation of any one of the foregoing aspects.

### BRIEF DESCRIPTION OF DRAWINGS

FIG. 1A and FIG. 1B each are a diagram of an architecture of a communication system according to an embodiment of this application;
FIG. 2A-1 to FIG. 2E are a diagram of a scenario according to an embodiment of this application;
FIG. 3A to FIG. 3E are a diagram of a scenario according to an embodiment of this application;
FIG. 4A is a diagram of a device architecture according to an embodiment of this application;
FIG. 4B is a diagram of an architecture of a Bluetooth protocol according to an embodiment of this application;
FIG. 4C to FIG. 4E each are a diagram of a device architecture according to an embodiment of this application;
FIG. 5 is a diagram of a device architecture according to an embodiment of this application;
FIG. 6A to FIG. 6C are a schematic flowchart of a short-range scanning method according to an embodiment of this application;
FIG. 7A and FIG. 7B are a schematic flowchart of a short-range scanning method according to an embodiment of this application;
FIG. 8A and FIG. 8B are a schematic flowchart of callback control according to an embodiment of this application; and
FIG. 9 is a diagram of a structure of a device according to an embodiment of this application.

### DESCRIPTION OF EMBODIMENTS

The technical solutions according to embodiments of this application are clearly and completely described in the following with reference to the accompanying drawings. In the descriptions of embodiments of this application, unless otherwise stated, "/" represents "or". For example, A/B may represent A or B. In this specification, "and/or" merely describes an association relationship between associated objects and represents that three relationships may exist. For example, A and/or B may represent the following three cases: Only A exists, both A and B exist, and only B exists. In addition, in the descriptions of embodiments of this application, "a plurality of" means two or more than two.

The following terms "first" and "second" are merely intended for a purpose of description, and shall not be understood as an indication or implication of relative importance or implicit indication of a quantity of indicated technical features. Therefore, a feature limited by "first" and "second" may explicitly or implicitly include one or more features. In the descriptions of embodiments of this application, unless otherwise specified, "a plurality of" means two or more.

A term "user interface (user interface, UI)" in the following embodiments of this application is a medium interface for interaction and information exchange between an application or an operating system and a user, and implements conversion between an internal form of information and a form that can be accepted by the user. The user interface is source code written in a specific computer language such as Java or an extensible markup language (extensible markup language, XML). Interface source code is parsed and rendered on an electronic device, and is finally presented as content that can be identified by the user. A frequently-used representation form of the user interface is a graphical user interface (graphic user interface, GUI), and is a user interface that is displayed in a graphical manner and that is related to a computer operation. The user interface may be a visual interface element like a text, an icon, a button, a menu, a tab, a text box, a dialog box, a status bar, a navigation bar, or a widget that is displayed on a display of the electronic device.

The following describes a communication system 10 in a short-range scanning method provided in embodiments of this application.

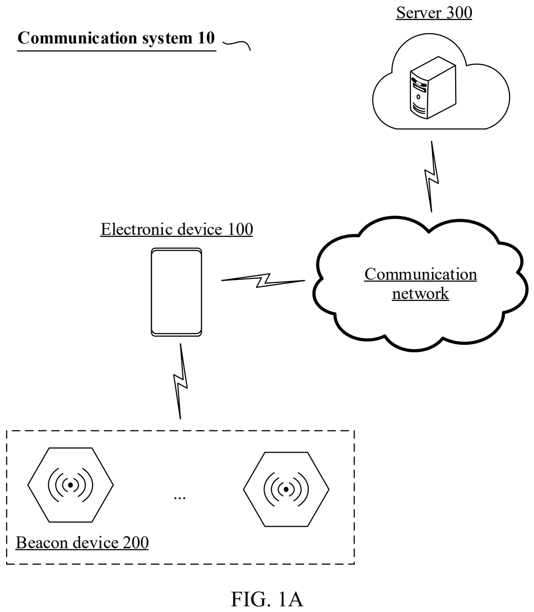

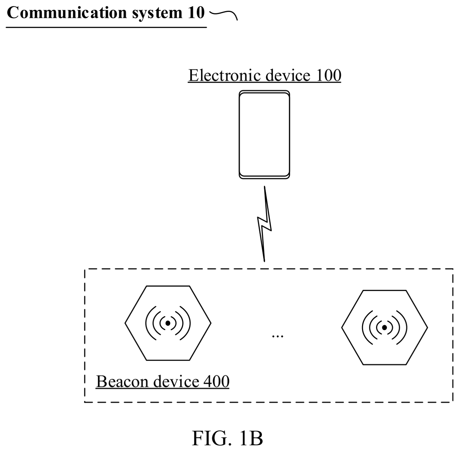

FIG. 1A and FIG. 1B are examples of diagrams of two communication systems 10 according to an embodiment of this application. The structure shown in this embodiment does not constitute a specific limitation on the communication system 10. In some other embodiments of this application, the communication system 10 may include more or fewer devices than those shown in the figure.

As shown in FIG. 1A, the communication system 10 includes an electronic device 100, at least one beacon device 200 near the electronic device 100, and a server 300 configured to query for a message attachment corresponding to the beacon device 200.

The electronic device 100 may be a mobile phone, a tablet computer, a desktop computer, a laptop computer, a handheld computer, a notebook computer, an ultra-mobile personal computer (ultra-mobile personal computer, UMPC), or a netbook, or may be a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device (a smart band), a vehicle-mounted device, a smart home device (a smart television, a smart screen, a large-screen device, or the like), and/or a smart city device. A specific type of the electronic device 100 is not specially limited in this embodiment of this application.

The beacon device 200 is a device that uses a short-range communication technology 1, and may be considered as an external device of a specific application (for example, an APP 1) on the electronic device 100. An operation principle of the beacon device 200 includes: The beacon device 200 continuously broadcasts its own unique identity (identity, ID) (the ID may also be referred to as a beacon ID (Beacon ID)) to surroundings by using the short-range communication technology 1, the APP 1 on the nearby electronic device 100 may scan and parse the ID of the beacon device 200, and finally, information push is implemented or a preset function corresponding to the ID is performed based on the ID of the beacon device 200. The beacon device does not have a data collection function, does not need to be connected to any host device, and does not steal identity information of a user of the electronic device 100. A service of scanning a beacon device in embodiments of this application may be referred to as a beacon scanning service, and the beacon scanning service may include a cloud scanning service and a local scanning service of a beacon. The beacon scanning service is described in detail in a subsequent embodiment.

In some embodiments, the beacon device 200 may be deployed at a fixed location (for example, a shopping mall, a gas station, a user's home, or a shared bicycle parking spot). When approaching the fixed location, the electronic device 100 may scan the beacon device 200. In some embodiments, the beacon device 200 may be deployed on a specific device (for example, a vehicle, a router, or a smart home device). When approaching the specific device, the electronic device 100 may scan the beacon device 200. The specific device may be movable or unmovable. The beacon device 200 may be independently deployed or may be integratedly deployed relative to the specific device. The short-range communication technology 1 may be a Wi-Fi communication technology, a Bluetooth communication (for example, classic Bluetooth (Basic Rate/Enhanced Date Rate, BR/EDR) or Bluetooth low energy (Bluetooth Low Energy, BLE)) technology, an ultra-wideband (Ultra Wide Band, UWB) communication technology, a near field communication (Near Field Communication, NFC) technology, a ZigBee communication technology, or the like. This is not specifically limited in this embodiment of this application. In actual application, a type, a deployment manner, and the used short-range communication technology 1 of the beacon device may be determined based on an application requirement and an application scenario.

In a subsequent embodiment, an example in which the short-range communication technology 1 is the BLE communication technology is used for description. In this example, the beacon device 200 may also be referred to as a Bluetooth beacon. The Bluetooth beacon is a hardware device based on the BLE advertising protocol, and is compatible with the iBeacon protocol or the Eddystone protocol. After purchasing the beacon device, a user may configure a hardware parameter (for example, a beacon type, a broadcast interval, and a power consumption level) of the beacon device via the APP 1 provided by a manufacturer.

The server 300 may be a server, a server cluster including a plurality of servers, or a cloud computing center. The server 300 may also be referred to as a cloud server 300. A beacon database of the server 300 is configured to store a message attachment corresponding to a beacon ID of each beacon device 200. In some embodiments, the electronic device 100 and the server 300 may be indirectly connected via at least one device in a communication network, and the communication network includes a wide area network and/or a local area network. The electronic device 100 may query the cloud server 300 for the message attachment corresponding to the beacon ID of the beacon device 200.

The communication system 10 shown in FIG. 1A is configured to implement the cloud scanning service of the beacon. In some embodiments, the cloud scanning service of the beacon includes two phases, namely, Phase 1 and Phase 2.

Phase 1: Register a beacon device of the cloud scanning service and start a beacon scanning task. Specifically, an application developer of the APP 1 registers a beacon device 200 of the cloud scanning service 1 with the cloud server 300, and configures a message attachment corresponding to a beacon ID of the beacon device 200. Message content in the message attachment is a message published by the cloud scanning service 1. After subscribing to the cloud scanning service 1, the APP 1 on the electronic device 100 starts a beacon scanning task of the cloud scanning service 1.

Phase 2: Scan and parse the beacon ID of the beacon device 200, and perform a preset function 1 based on a message attachment 1 corresponding to the beacon ID. Specifically, the beacon device 200 continuously broadcasts its own unique beacon ID to surroundings through BLE. The nearby electronic device 100 may scan and parse the beacon ID. The electronic device 100 queries the server 300 for the message attachment 1 corresponding to the beacon ID. The APP 1 may perform the preset function 1 based on message content of the message attachment 1. Performing the preset function 1 may include one or more of the following: controlling another device to perform a preset operation, outputting push information 1, invoking another APP to perform a preset operation, and the like.

The following describes an example of an application scenario of the cloud scanning service of the beacon.

Scenario 1: In an information push scenario, the APP 1 may output the push information 1 based on the message content of the message attachment 1. After a Bluetooth beacon (for example, the beacon device 200) is introduced into a place like a shopping mall, a gas station, or a museum, the Bluetooth beacon may be deployed in each product area/exhibition area. When a user with the electronic device 100 (for example, a mobile phone 100) approaches the beacon device 200 in the shopping mall or the gas station, the mobile phone 100 receives and displays product discount information of a nearby product. When the user with the mobile phone 100 approaches the beacon device 200 in the museum, the mobile phone 100 receives and outputs a detailed introduction (for example, a voice explanation) of a nearby exhibit.

In this embodiment of this application, the push information 1 (for example, the discount information and the detailed description) can be presented in one or more information types such as a card, a text, a picture, a video, and an animation. In an implementation, the push information 1 is presented in a form of rich media content. The push information 1 may be displayed in one or more display areas of a current display interface of the mobile phone 100, a leftmost screen, a notification bar, a status bar, and a user interface of the APP 1. A display area and a presentation form of the push information 1 are not specifically limited in this embodiment of this application.

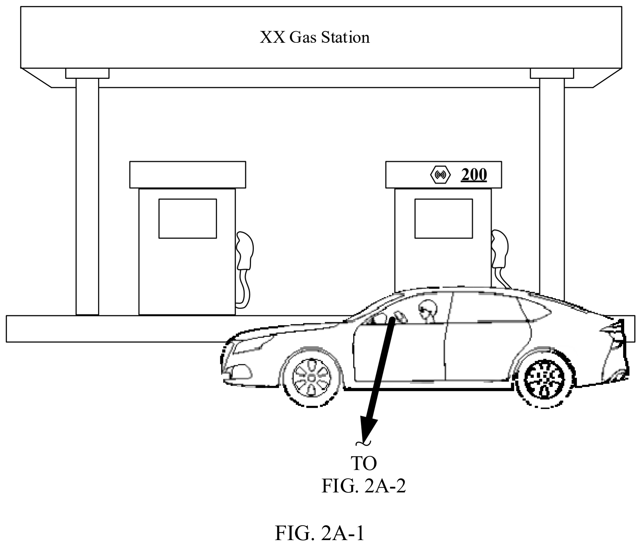

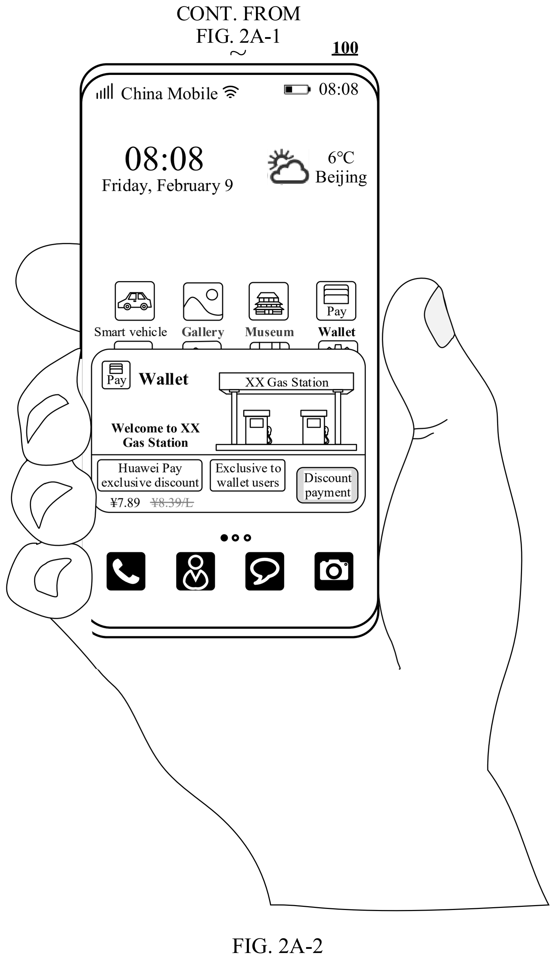

For example, FIG. 2A-1 to FIG. 2E are related diagrams of an information push scenario of a gas station.

As shown in FIG. 2A-1 and FIG. 2A-2, the beacon device 200 is deployed at the gas station, the beacon ID of the beacon device 200 corresponds to the message attachment 1, and the message content of the message attachment 1 indicates discount information for refueling at the gas station provided by application payment (that is, Huawei Pay) of a wallet APP. After the user drives close to the gas station, the mobile phone 100 of the user may scan the beacon ID broadcast by the beacon device 200. After obtaining the corresponding message attachment 1 from the server 300 based on the beacon ID, the mobile phone 100 displays, based on the message content of the message attachment 1, the discount information for refueling at the gas station provided by the application payment of the wallet APP.

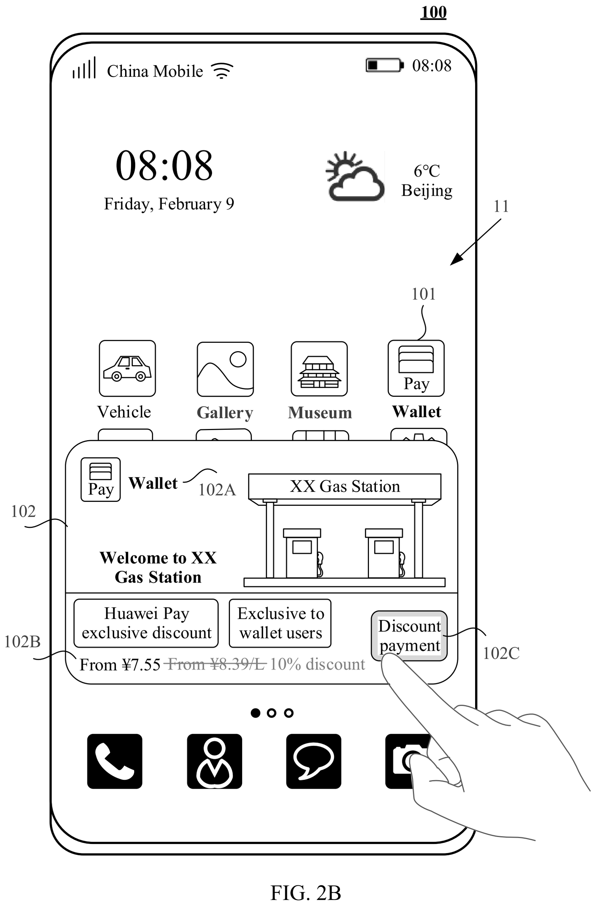

For example, as shown in FIG. 2B, the mobile phone 100 may display the discount information in the current display interface of the mobile phone 100. For example, the current display interface of the mobile phone 100 is a home screen 11 used to display an installed application (application, APP). The wallet APP is installed on the mobile phone 100, and the home screen 11 may display an application icon 101 of the wallet APP. The mobile phone 100 displays a widget 102 based on the message content of the message attachment 1, and the widget 102 indicates the discount information. The widget 102 includes the application icon and a name 102A of the wallet APP, discount information 102B, and a discount payment control 102C. The discount information 102B indicates that a 10% discount can be provided for Huawei Pay of the wallet APP. The discount payment control 102C is used to redirect to a code scanning interface, a QR code interface, or a home page of the wallet APP, or a payment interface for the gas station. The redirected interface of the wallet APP is used to implement Huawei Pay for refueling at the gas station. The redirected interface is not specifically limited in this embodiment of this application. The code scanning interface is an interface used to perform payment by scanning a payment QR code of the gas station. The QR code interface is an interface used to display a payment QR code of the wallet APP. The home page is used to display various function controls of the wallet APP, for example, a control used to invoke the code scanning interface or the QR code interface. The payment interface is an interface displayed by the mobile phone 100 after the mobile phone 100 scans the payment QR code of the gas station through the code scanning interface, or an interface displayed by the mobile phone 100 after a scanning apparatus of the gas station scans the payment QR code of the wallet APP.

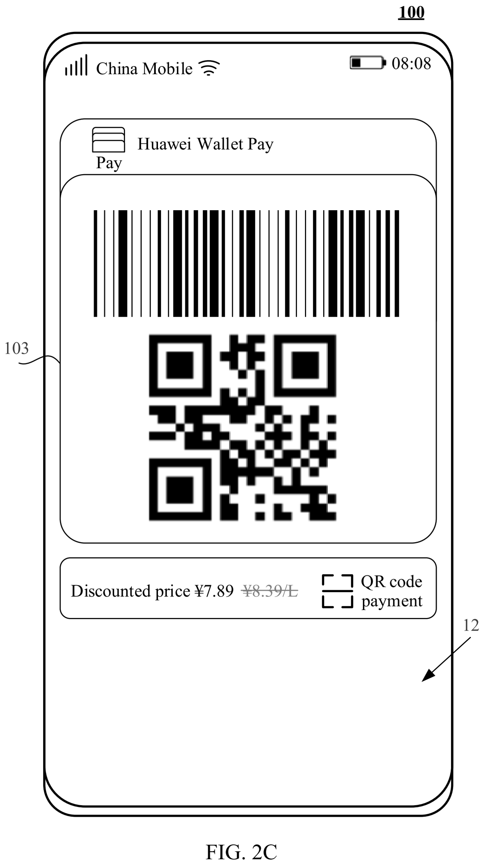

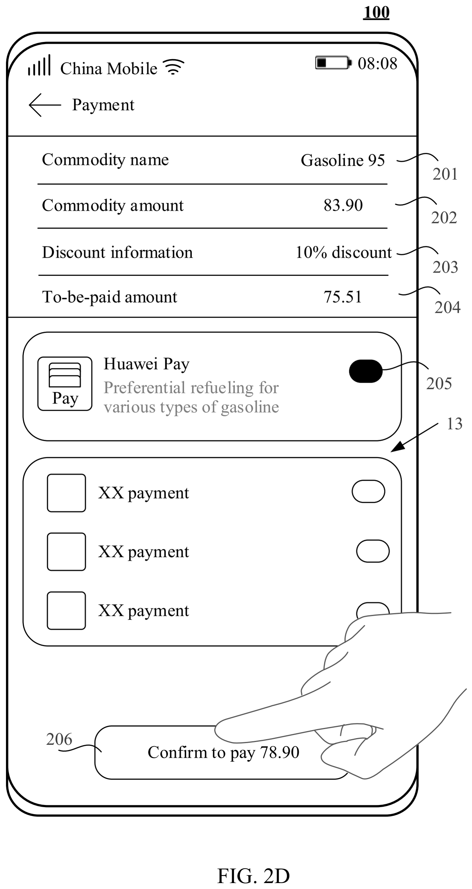

In an implementation, as shown in FIG. 2B and FIG. 2C, when it is detected that the user taps the discount payment control 102C, the mobile phone 100 displays a QR code interface 12, and the QR code interface 12 includes a payment QR code 103. As shown in FIG. 2C and FIG. 2D, after it is detected that the code scanning apparatus of the gas station scans the payment QR code 103, a payment interface 13 is displayed based on a payment amount sent by the code scanning apparatus. The payment interface 13 may include: a commodity name (that is, a type of fuel for a vehicle) 201, a commodity amount 202 before discount, discount information 203, and a to-be-paid amount 204 after discount. Selection controls of various payment methods may be further displayed, for example, a selection control 205 of Huawei Pay. The selection control can be selected or unselected, and the user can switch a status of the selection control. As shown in FIG. 2D, the selection control 205 of Huawei Pay is currently in a selected state, and the discount information 203 displays the discount information of Huawei Pay indicated by the message attachment 1, that is, a 10% discount. The payment interface 13 includes a payment confirmation control 206. After detecting that the user taps the payment confirmation control 206, the mobile phone 100 may display a payment completion interface after password-free payment or a password input interface. The password input interface is used to enter a payment password. After it is detected that the password entered by the user in the password input interface is correct, the payment completion interface may be displayed. FIG. 2B to FIG. 2D are an implementation of user interfaces for implementing discount payment according to this application. In this embodiment of this application, discount payment of Huawei Pay may alternatively be implemented in another manner. This is not specifically limited herein.

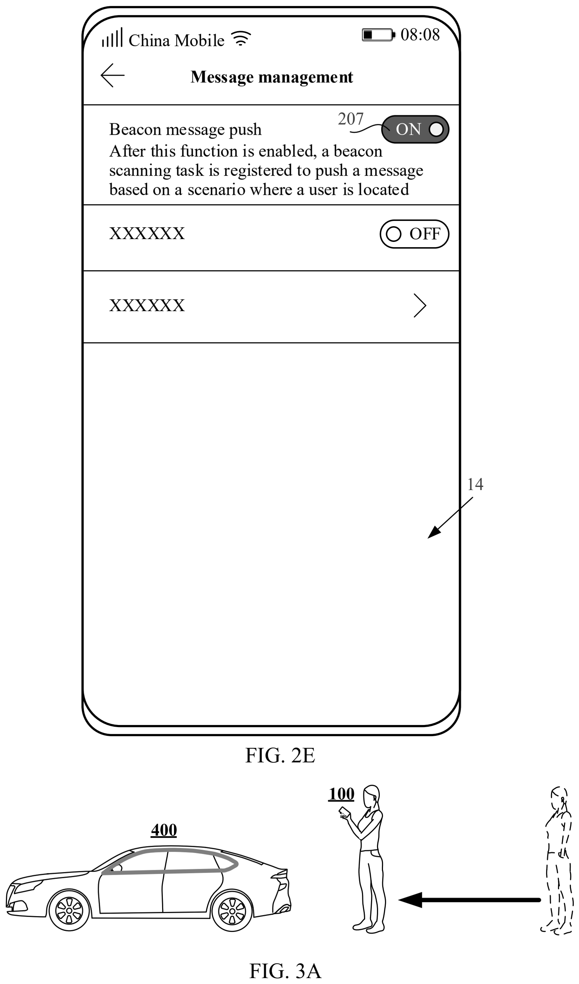

In some embodiments, as shown in FIG. 2E, an application setting interface 14 of the wallet APP of the mobile phone 100 includes a switch control 207 of a beacon push message. The switch control 207 includes two states: on state and off state. The mobile phone 100 may switch a status of the switch control 207 based on an input operation (for example, a tap operation) of the user. Only when the switch control 207 is in an on state, the wallet APP scans a nearby beacon device, and pushes the discount information based on the beacon ID of the beacon device. In this embodiment of this application, the beacon push message of the cloud scanning service may alternatively be enabled in another manner. This is not specifically limited herein.

Scenario 2: Location service scenario. A location service may be used for indoor positioning in scenarios such as an exhibition, a library, a museum, a hotel, an airport, a campus, and a hospital to facilitate personnel or object management. For example, a beacon device (for example, the beacon device 200) is deployed in each exhibition area of the museum, and a museum APP is installed on the mobile phone 100. When a visitor with the mobile phone 100 passes through the beacon device 200, the mobile phone 100 scans and parses the beacon ID of the beacon device 200. The message attachment that corresponds to the beacon ID and that is queried by the mobile phone 100 from the cloud indicates a deployment location of the beacon device 200. The museum APP may determine a location of the user in the museum based on the deployment location of the beacon device 200, and may further indicate the location of the user on a map provided by the museum APP.

In addition to the foregoing scenario 1 and scenario 2, the cloud scanning service implemented by using the short-range scanning method provided in this embodiment of this application may be further applied to more other scenarios. This is not specifically limited herein.

The communication system 10 shown in FIG. 1B is configured to implement a local scanning service of a beacon. As shown in FIG. 1B, the communication system 10 includes an electronic device 100 and at least one beacon device 400 near the electronic device 100. The local scanning service of the beacon does not depend on a cloud service of the beacon. That is, a message attachment corresponding to a beacon ID does not need to be configured, and the message attachment does not need to be queried from the cloud. This provides high flexibility for a developer. For the beacon device 400, refer to related descriptions of the beacon device 200.

In some embodiments, the local scanning service of the beacon includes two phases, namely, Phase 3 and Phase 4.

Phase 3: Register a beacon device of the local scanning service, and start a beacon scanning task. Specifically, an APP 1 of the electronic device 100 subscribes to a local scanning service 1, and the APP 1 registers a beacon device 400 of the local scanning service 1, and stores a correspondence 1 between a beacon ID of the registered beacon device 400 and a preset function 2.

Phase 4: Scan and parse the beacon ID of the beacon device 400, and perform the preset function 2 corresponding to the beacon ID. Specifically, the beacon device 400 broadcasts its own unique beacon ID to surroundings through BLE. The APP 1 of the nearby electronic device 100 may scan and parse the beacon ID. The electronic device 100 performs, based on the correspondence 1, the preset function 2 corresponding to the beacon ID. Performing the preset function 2 includes one or more of the following: controlling another device to perform a preset operation, outputting push information 2, invoking another APP to perform a preset operation, and the like. For a display area and a display form of the push information 2, refer to related descriptions of the push information 1. The preset function 2 is not specifically limited in this embodiment of this application.

The following describes an example of an application scenario of the local scanning service of the beacon.

Scenario 3: Intelligent unlocking/door opening scenario. For a door lock apparatus that can be intelligently controlled, for example, a home door, a vehicle door, or an electric vehicle lock, the beacon device 400 may be deployed in or near the door lock apparatus. When the user carries the electronic device 100 (for example, the mobile phone 100) and approaches the beacon device 400, the mobile phone 100 may automatically control the door lock apparatus to unlock.

For example, FIG. 3A to FIG. 3E are related diagrams of a scenario of intelligent unlocking of a vehicle door.

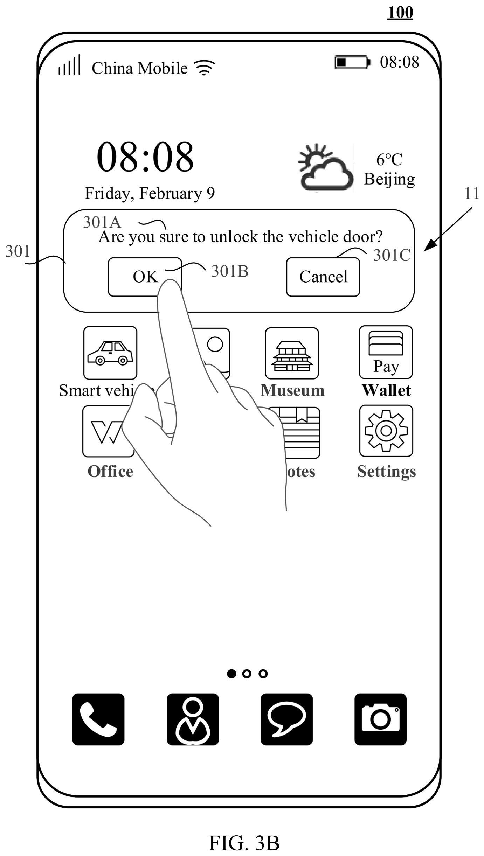

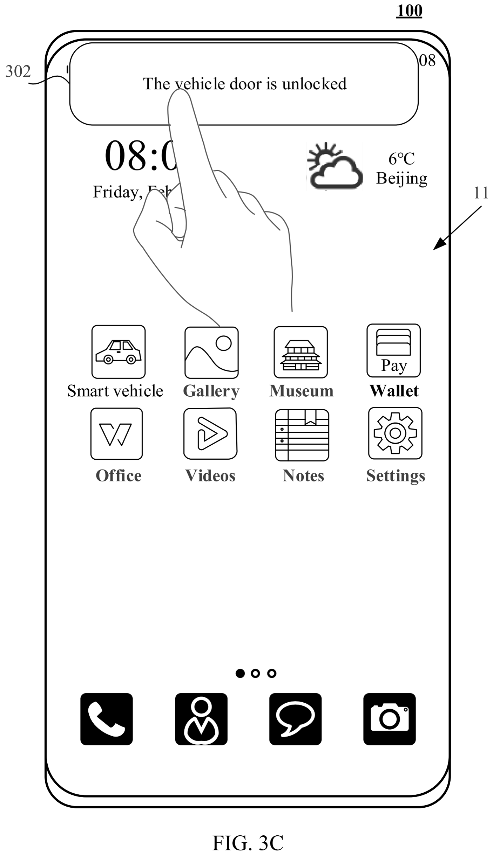

As shown in FIG. 3A, the beacon device 400 is deployed on the door of the vehicle, and the user carries the mobile phone 100 and approaches the vehicle. As shown in FIG. 3B, after the mobile phone 100 obtains, through scanning, a beacon packet broadcast by the beacon device 400 and obtains the beacon ID, the vehicle APP displays a prompt box 301 based on the beacon ID. The prompt box 301 includes prompt information 301A, a confirmation control 301B, and a cancellation control 301C. The prompt information 301A is used to prompt the user whether to unlock the vehicle door, the confirmation control 301B is used to determine to unlock the vehicle door, and the cancellation control 301C is used to cancel unlocking of the vehicle door. When detecting an input operation (for example, a tap operation) performed by the user on the confirmation control 301B, the mobile phone 100 sends an instruction 1 to a vehicle-mounted device of the vehicle 1. Based on the instruction 1, the vehicle-mounted device controls the vehicle door to be unlocked. In some embodiments, after the vehicle door is successfully unlocked, the vehicle-mounted device sends confirmation information to the mobile phone 100, to feed back that the vehicle door is unlocked. As shown in FIG. 3C, the mobile phone 100 displays prompt information 302 based on the confirmation information, where the prompt information 302 is used to prompt the user that the vehicle door is unlocked.

In some embodiments, the user does not need to determine whether to unlock the vehicle. Based on the beacon ID, the mobile phone 100 may directly send the instruction 1 to the vehicle-mounted device of the vehicle 1, to control the vehicle door to be unlocked, and display the prompt information 302 after the vehicle door is unlocked. For display areas and display forms of the prompt box 301 and the prompt information 302, refer to related descriptions of the push information 1. Details are not described herein again.

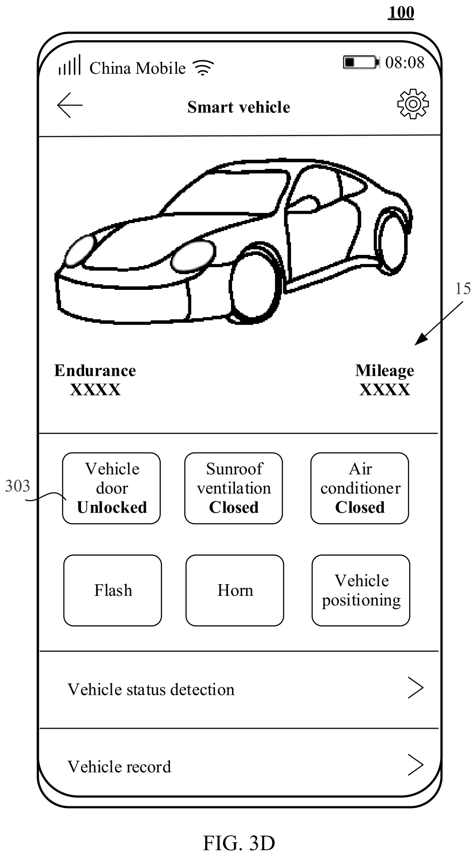

In some embodiments, when detecting an input operation (for example, tapping) performed by the user on the prompt information 302, the mobile phone 100 may display a user interface 15 of the vehicle APP shown in FIG. 3D. The user interface 15 includes a control 303 used to control unlocking of the vehicle door. After the vehicle door is unlocked, display content on the control 303 may indicate that the vehicle door is unlocked. It may be understood that, if the user wants to control the vehicle door to be unlocked by using the mobile phone in a conventional manner, the user needs to first start the vehicle APP, find the control 303 in the vehicle APP, and then control the vehicle door to be unlocked by using the control 303. However, according to the short-range scanning method provided in this embodiment of this application, when approaching the vehicle, the mobile phone 100 may automatically trigger, based on the beacon ID obtained through scanning, unlocking of the vehicle door, so that a user operation is convenient.

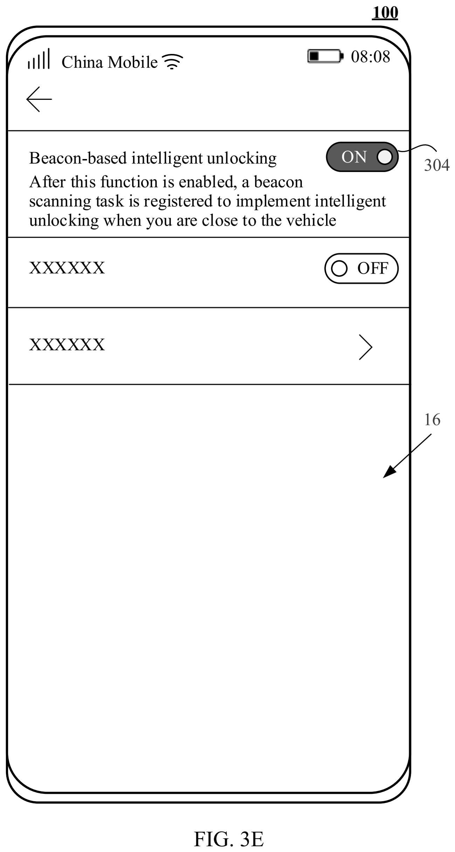

In some embodiments, as shown in FIG. 3E, an application setting interface 16 of the vehicle APP of the mobile phone 100 includes a switch control 304 for intelligent unlocking. The switch control 304 includes two states: on state and off state. The mobile phone 100 may switch a status of the switch control 304 based on an input operation (for example, a tap operation) of the user. The vehicle APP provides a function of implementing intelligent unlocking through beacon scanning only when the switch control 304 is in an on state. In this embodiment of this application, the function may alternatively be enabled in another manner. This is not specifically limited herein.

Scenario 4: Attendance clock-in/out scenario. The beacon device 400 is deployed in a clock-in/out apparatus. When an employee with the mobile phone 100 passes through the beacon device 400, a clock-in/out application of the mobile phone 100 may automatically clock in/out based on a beacon ID, obtained through scanning, of the beacon device 400.

In addition to the foregoing scenario 3 and scenario 4, the local scanning service implemented by using the short-range scanning method provided in this embodiment of this application may be further applied to more other scenarios. This is not specifically limited herein.

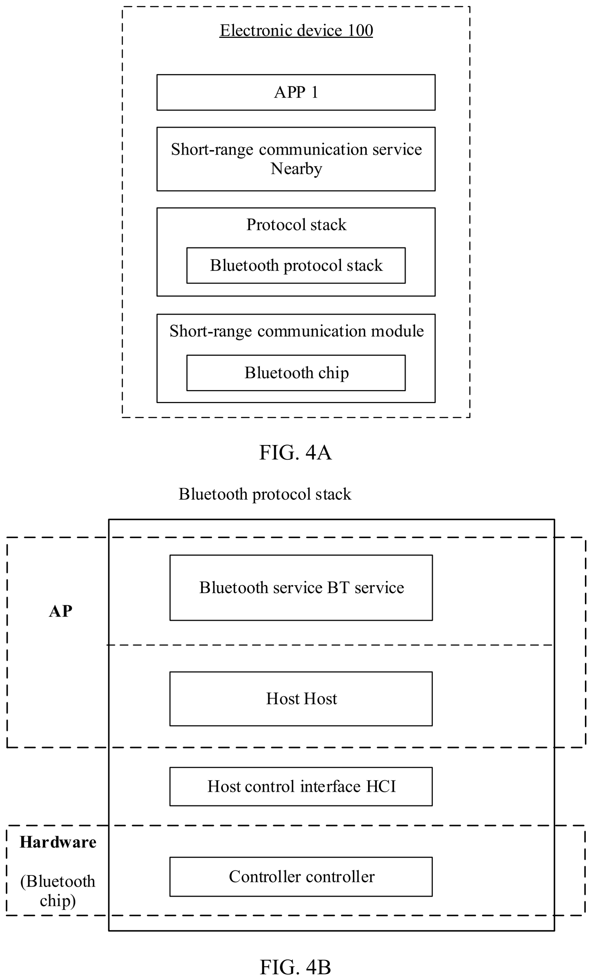

In some embodiments, in the device architecture shown in FIG. 4A, a software system of an electronic device 100 includes an APP 1 and a short-range communication service (Nearby), a protocol stack includes a Bluetooth protocol stack, and hardware includes a short-range communication module (for example, a Bluetooth chip) that uses a short-range communication technology 1. A server 300 may be a cloud server of the Nearby service. For example, in the communication systems shown in FIG. 1A and FIG. 1B, the short-range communication technology 1 is a Bluetooth low energy communication technology. For a beacon scanning service, the APP 1 of the electronic device 100 may register a beacon scanning task corresponding to the service with Nearby. Nearby may deliver the beacon scanning task to the Bluetooth chip through the Bluetooth protocol stack, to drive the Bluetooth chip to scan a surrounding beacon device. After scanning a beacon packet broadcast by the beacon device, the Bluetooth chip calls back related data of the beacon packet to the Bluetooth protocol stack, and the Bluetooth protocol stack reports the data to the APP 1 through Nearby.

As shown in FIG. 4B, a protocol framework of a Bluetooth protocol may include but is not limited to a Bluetooth service (BT service), a host (host) protocol stack, a host controller interface (Host Controller Interface, HCI), and a controller (controller).

The Bluetooth service Service defines a message format and an application rule of each application. To implement interconnection and interworking between different devices on different platforms, the Bluetooth protocol formulates specifications for various possible and universal application scenarios. The host protocol stack defines a core protocol (protocol), including but not limited to a basic Bluetooth service protocol, a logical link control and adaptation protocol, and the like. The HCI provides a standardized interface for communication between the host protocol stack and the controller. Hardware corresponding to the HCI is a physical bus configured to connect a main processor and the Bluetooth chip. In another example, the HCI may not be included. The controller defines a bottom-layer hardware part, including radio frequency (RF), baseband (BB), and link management (LM), can filter and transmit data bit streams, and mainly defines a condition that a Bluetooth transceiver needs to meet for normal operation in this frequency band. Optionally, the host protocol stack Host includes the Bluetooth service.

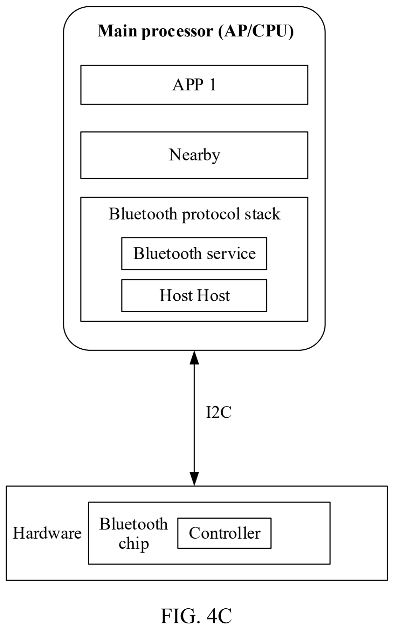

In some embodiments, as shown in FIG. 4C, some or all modules (for example, the APP 1 and Nearby) of the software system of the electronic device 100, and the host protocol stack Host and the Bluetooth service in the Bluetooth protocol framework run on the main processor. The controller runs in the Bluetooth chip. Therefore, after the Bluetooth chip obtains the beacon packet through scanning, when the Bluetooth chip reports the beacon packet to the host protocol stack in the main processor via the controller, if the main processor is in a sleep state, the main processor needs to be woken up. The main processor is an application processor (application processor, AP) or a central processing unit (central processing unit, CPU). In a subsequent embodiment, the AP is used as an example for description.

The device architecture of the electronic device 100 shown in FIG. 4C has the following problems: 1. In actual application, there may be a large quantity of Bluetooth devices around the electronic device 100. The electronic device 100 obtains, through scanning, a large quantity of beacon packets broadcast by irrelevant Bluetooth beacons. Consequently, the main processor is invalidly woken up a large quantity of times, resulting in high device power consumption. In addition, in a cloud scanning service of a beacon, after a beacon ID of the beacon device is obtained through scanning, Nearby needs to query for a message attachment from the cloud, resulting in a large quantity of interface requests to the Nearby cloud. 2. A same beacon device continuously broadcasts. Because a beacon broadcast interval (for example, 200 milliseconds) is usually short, if the electronic device 100 is near a beacon device for a long time, the Bluetooth chip frequently calls back a same beacon packet to the main processor. As a result, after processing the beacon packet, the main processor is still continuously woken up because of the beacon packet.

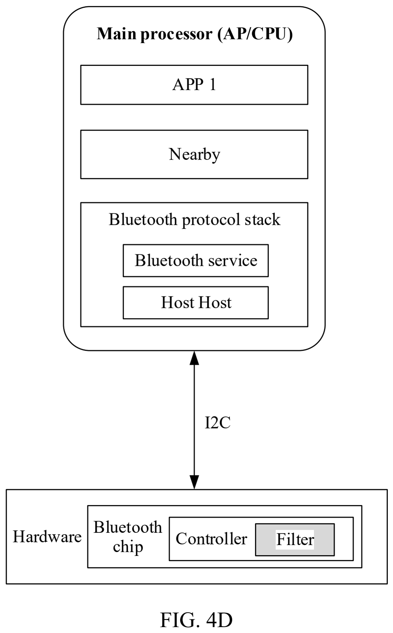

In some embodiments, for a beacon scanning service, when registering a beacon scanning task with Nearby, the APP 1 further indicates a filter condition of a beacon device corresponding to the task; and when delivering a beacon scanning task to the Bluetooth chip, Nearby further delivers a corresponding filter condition. Refer to FIG. 4D. The Bluetooth chip sets, based on the filter condition corresponding to the beacon scanning task delivered by Nearby, a filter corresponding to the task. The filter is configured to obtain, through filtering, a packet that meets the filter condition and that is in Bluetooth packets obtained through scanning. Generally, one Bluetooth scanning task (for example, the beacon scanning task) corresponds to one filter. In this embodiment, the device architecture of the electronic device 100 shown in FIG. 4D further has the following problem: Due to a hardware limitation of the Bluetooth chip, a quantity (for example, 32) of filters that can be set for the Bluetooth chip is limited, and a large quantity of beacon scanning services of applications cannot be supported.

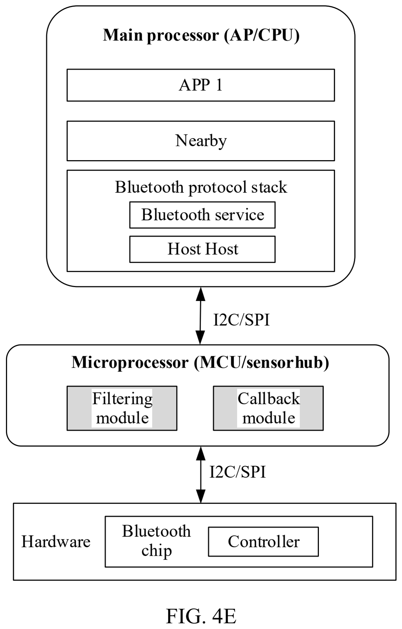

An embodiment of this application further provides an electronic device 100. Refer to FIG. 4E. The electronic device 100 further includes a microprocessor. The microprocessor is a processor whose power consumption is lower than that of the main processor, and the microprocessor may integrate some functions of the main processor. The microprocessor may be a processor like a micro control unit (Micro Control Unit, MCU) or an intelligent sensor hub Sensorhub. In a subsequent embodiment, Sensorhub is used as an example for description. A physical bus connecting the main processor and the microprocessor and a physical bus connecting the microprocessor and the Bluetooth chip are not specifically limited in this embodiment of this application, for example, a bus configured to implement an I2C (Inter-Integrated Circuit) or a serial peripheral interface (Serial Peripheral Interface, SPI).

Sensorhub is a solution that combines software and hardware based on a low-power MCU and a lightweight real-time operating system (Real-time operating system, RTOS). A main function of Sensorhub is to connect and process data from various sensor devices. Sensorhub has low power consumption and can run for a long time.

As shown in FIG. 4E, in this embodiment of this application, Sensorhub is further configured to connect to and process data from the Bluetooth chip. Sensorhub includes a filtering module and/or a callback module. The AP is further configured to send a filter condition corresponding to the beacon scanning task to Sensorhub, and the filter condition may be used to obtain, through filtering, a packet sent by a beacon device that has been registered with the beacon scanning service. The filtering module of Sensorhub is configured to set a beacon filter based on the filter condition, to filter a packet obtained through scanning by the Bluetooth chip. Sensorhub calls back a beacon packet obtained through filtering to the main processor for further processing, and discards another irrelevant beacon packet of the beacon device. Sensorhub filters packets at a software layer. A quantity of filters and services supported by Sensorhub is much greater than that supported by the Bluetooth chip. In addition, the callback module may control, based on a callback condition delivered by the APP 1, a callback frequency at which packets of a same beacon device are called back to the AP. In this way, consumption of filter resources on hardware can be reduced, a processing capability of the electronic device 100 for a beacon scanning service is improved, a quantity of times of waking up the main processor is reduced, power consumption of the electronic device 100 is reduced, beacon management with low power consumption and high efficiency is implemented, and the problems described in FIG. 4C and FIG. 4D are effectively resolved.

The device architecture shown in FIG. 4E is not limited to the beacon scanning service (that is, not limited to scanning a beacon device), and is also applicable to another Bluetooth scanning service in which a target Bluetooth device needs to be scanned. The filter condition corresponding to the target Bluetooth device is set in Sensorhub, so that a packet of the target Bluetooth device can be obtained through filtering from Bluetooth packets obtained through scanning of surrounding Bluetooth devices. In actual application, a corresponding filter condition may be set based on a service requirement and a characteristic of the target Bluetooth device. The Bluetooth scanning service and the corresponding filter condition are not specifically limited in this embodiment of this application.

It should be noted that the short-range communication technology 1 is another short-range communication technology like Wi-Fi, NFC, UWB, or ZigBee, and when the short-range communication module is a communication module (for example, a Wi-Fi chip or a UWB chip) that uses the another short-range communication technology, the problems described in FIG. 4C and FIG. 4D also exist. Similarly, the short-range scanning method provided in this embodiment of this application may also be adaptively applied to an electronic device 100 using the another short-range communication technology. For example, Wi-Fi is used as an example. Sensorhub may filter, based on a filter condition of a Wi-Fi scanning task delivered by the AP, a packet reported by the Wi-Fi chip, to obtain, through filtering, a packet sent by a target Wi-Fi device, and send the packet to the AP for further processing. Sensorhub may control, based on the callback condition delivered by the APP 1, a callback frequency at which beacon packets of a same Wi-Fi device are called back to the AP.

The following describes in detail a device architecture of the electronic device 100 in embodiments of this application.

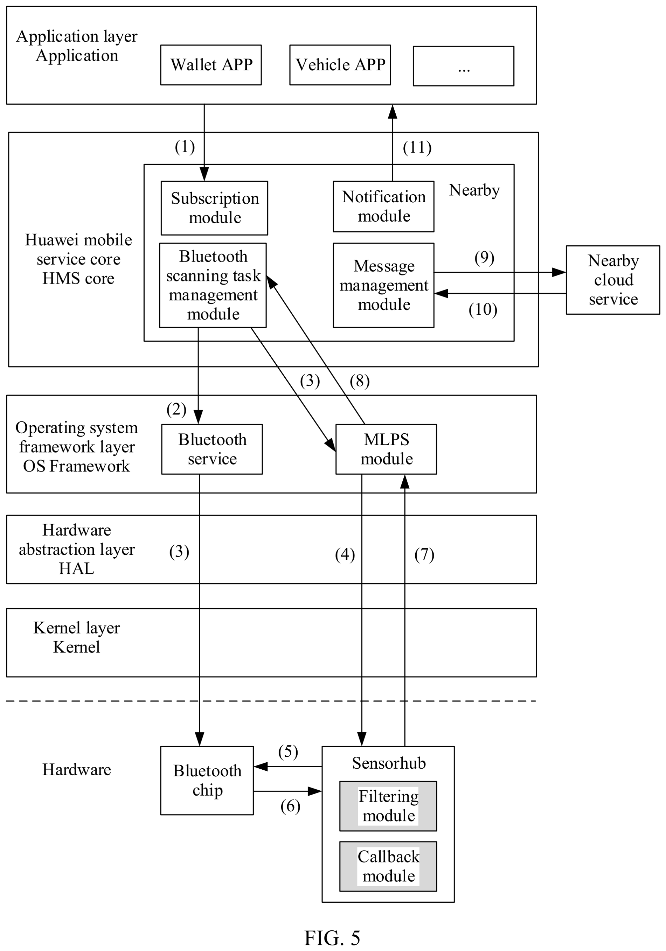

As shown in FIG. 5, the device architecture of the electronic device 100 may include a software system and hardware of the electronic device. The hardware includes a Bluetooth chip and a microprocessor (for example, an MCU or Sensorhub). Some or all modules in the software system of the electronic device run on a main processor.

The electronic device 100 may carry iOS, Android, Microsoft, or another software system. The software system is not specifically limited herein. The software system of the electronic device 100 may use a layered architecture, an event-driven architecture, a microkernel architecture, a micro service architecture, or a cloud architecture. The following uses an Android system with a layered architecture as an example to describe the software structure of the electronic device.

FIG. 5 is a block diagram of a software structure of a software system of the electronic device 100 according to an embodiment of this application.

In a layered architecture, software is divided into several layers, and each layer has a clear role and task. The layers communicate with each other through a software interface. In some embodiments, the Android system is divided into four layers: an application layer (Application), a mobile service center layer (Huawei Mobile Services core, HMS core), an application framework layer (Application Framework), a hardware abstraction layer (hardware abstraction layer, HAL), and a kernel layer (Kernel) from top to bottom.

The application layer may include a series of application packages. As shown in FIG. 5, the application package may include a wallet APP, a vehicle APP, and a museum APP, and may further include other applications such as Camera, Gallery, Calendar, Phone, Map, Navigation, WLAN, Bluetooth, Music, and Messages. A user may install a required application based on an actual requirement. The application package is not specifically limited herein.

The HMS core is a mobile service framework that provides various service capabilities for application developers based on Huawei terminal devices and Android platforms. For example, the HMS core provides basic services such as a Huawei account and payment for a terminal user. After logging in to the Huawei account, the user can access all Huawei services such as Huawei AppGallery, cloud space, and Health. In addition, the HMS core provides services such as message push, quick sign-in with Huawei account, in-app purchase, and location services for developers' applications. This helps developers bring better user experience to Huawei terminal users.

The application framework layer provides an application programming interface (application programming interface, API) and a programming framework for an application at the application layer. The application framework layer includes some predefined functions.

Android runtime includes a core library and a virtual machine. The Android runtime is responsible for scheduling and management of an Android system.

The core library includes two parts: a function that needs to be called in Java language and a core library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The kernel layer is a layer between hardware and software. The kernel layer provides underlying drivers for various types of hardware, such as a Bluetooth driver, a Wi-Fi driver, a display driver, an audio driver, and a sensor driver (for example, a touch sensor driver), and is further responsible for functions such as file management, process management, a network protocol stack, system security, and memory management.

The HAL layer is an interface layer between a kernel and a hardware circuit, and aims to abstract hardware, and provide a virtual hardware platform and service for an operating system. The HAL layer converts upper-layer invoking into direct access and control of hardware, and a specific activity is to establish a hardware-related driver.

In this embodiment of this application, the HMS core includes Nearby. Nearby provides implementation of core service logic such as subscription to a beacon scanning service, registration of a beacon scanning task, Bluetooth scanning task management, and message management, and provides an interface for an APP at the application layer to access. A Nearby cloud service provides a capability of managing a beacon parameter and message content. The developer may configure and publish a message through the Nearby cloud service, and scan a beacon device and obtain a published message on a terminal device (for example, the electronic device 100) through a Nearby Message API. After a developer application (for example, an APP 1) invokes the interface to subscribe to a beacon message on the terminal device, Nearby continuously scans a beacon packet in the background. When a beacon packet is obtained through scanning, Nearby notifies the developer application via callback.

In some embodiments, functional modules in the HMS core may alternatively be integrated into the application framework layer.

The application framework layer includes a Bluetooth service and a multiprotocol label switching technology (Multiprotocol Label Switch, MLPS), and encapsulates an interface of the microprocessor (for example, the MCU or Sensorhub). MLPS is a data packet forwarding technology that replaces IP forwarding with label switching. MPLS is located between a link layer and a network layer in a TCP/IP protocol stack. MPLS provides a connection service for an IP layer and obtains a service from the link layer.

The microprocessor encapsulates logic like beacon packet filtering and callback control in the microprocessor, and may interact with the Bluetooth chip to implement a beacon scanning management capability. The microprocessor may be a low-power processor like the MCU or Sensorhub. The microprocessor includes a filtering module and/or a callback module. For details, refer to related descriptions in FIG. 4E.

With reference to the device architecture shown in FIG. 5, the following separately describes in detail the short-range scanning method provided in embodiments of this application for the foregoing two beacon scanning services.

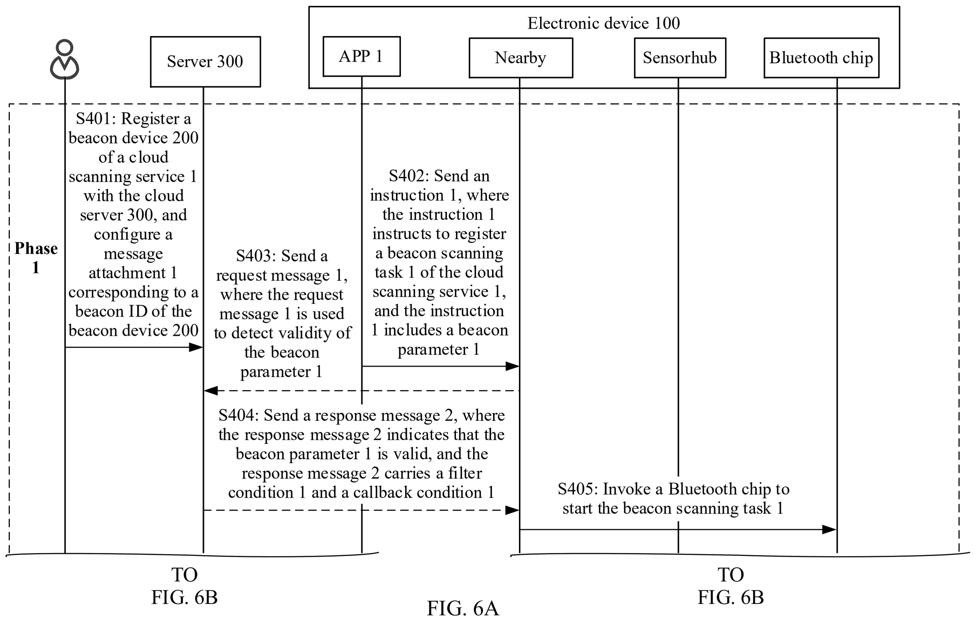

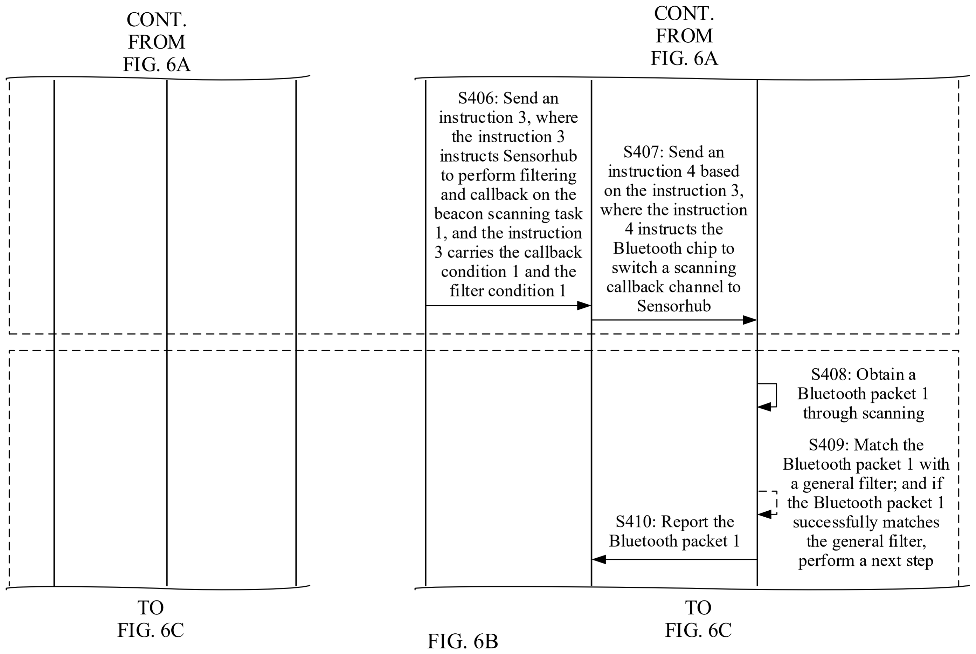

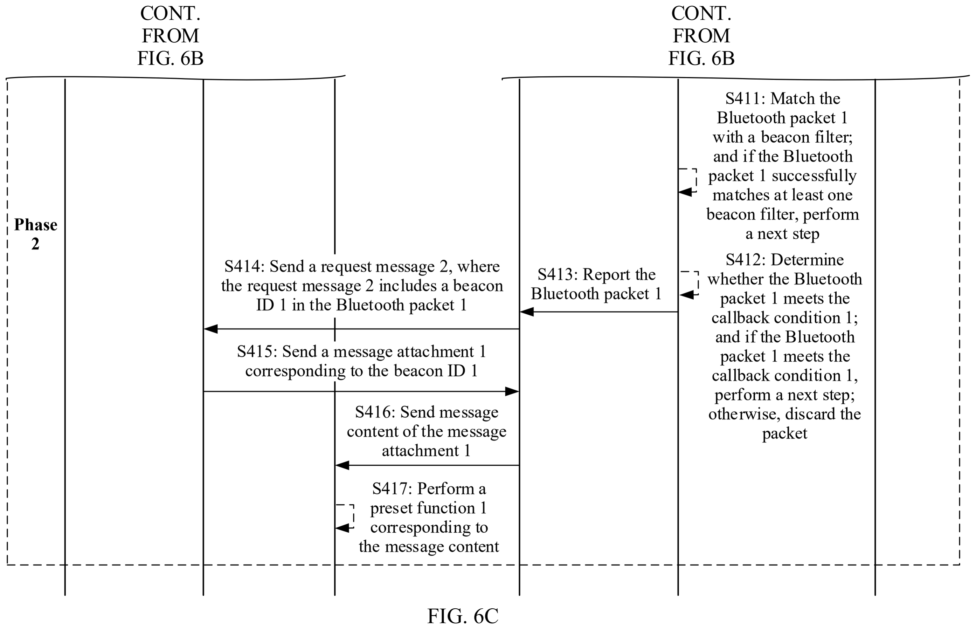

For example, for a cloud scanning service 1 of a beacon, FIG. 6A to FIG. 6C are a schematic flowchart of a short-range scanning method. The short-range scanning method includes but is not limited to step S401 to step S417.

Phase 1: Register a beacon device of a cloud scanning service and start a beacon scanning task.

S401: An application developer registers a beacon device 200 of the cloud scanning service 1 with a cloud server 300 of Nearby, and configures a message attachment 1 corresponding to a beacon ID of the beacon device 200, where message content in the message attachment 1 includes a message published by the cloud scanning service 1.

In some embodiments, the application developer needs to first register a developer account in a beacon management system (for example, Huawei Developers) provided by the cloud server 300 of Nearby, and creates a project. The system automatically allocates a namespace (Namespace) to each project. A namespace ID and a message type of a project to which the cloud scanning service 1 belongs are configured. Then, the beacon device 200 is registered with the project that corresponds to the cloud scanning service 1 and that has been created on the cloud server 300, and a hardware parameter of the beacon device 200 is configured. The message attachment 1 is configured, and the beacon ID of the beacon device 200 and the message attachment 1 are associated. One beacon ID can be associated with a plurality of message attachments.

The message type is defined by the developer based on an actual service requirement. For example, a message type of the cloud scanning service 1 is an HMS message. The hardware parameter may include the beacon ID of the beacon device 200, a beacon device type (Beacon type), a namespace of a project to which the cloud scanning service 1 belongs, a broadcast interval, a power consumption level, a reference transmit power, and the like. The beacon device type may include an iBeacon type and an Eddystone type. The message attachment 1 includes an ID of the message attachment, a namespace of a project to which the cloud scanning service 1 belongs, a message type (Type), and message content published by the cloud scanning service 1. Registration, management, and configuration of the beacon device 200 may be implemented in a plurality of manners, for example, may be implemented via a network console (WEB dashboard), an application installed on the electronic device 100, or a command line. Implementation of step S401 is not specifically limited in this embodiment of this application.

In this embodiment of this application, after an APP 1 is installed on the electronic device 100, a cloud scanning service 1 of the APP 1 may be automatically subscribed to, and a beacon scanning task of the cloud scanning service 1 is started. In some embodiments, after the APP 1 is installed on the electronic device 100, the APP 1 of the electronic device 100 subscribes to all cloud scanning services of the APP 1 in response to an input operation of a user. For example, the APP 1 is a wallet APP, and the cloud scanning service 1 is a discount push service of the gas station described in FIG. 3A to FIG. 3E. Refer to related descriptions in FIG. 3E. The input operation may be an operation performed on the switch control 207 of the beacon message push, and the operation is used to subscribe to all beacon scanning services of the APP 1. In some embodiments, after the APP 1 is installed on the electronic device 100, the APP 1 provides a plurality of cloud scanning services (for example, the cloud scanning service 1); and the APP 1 of the electronic device 100 subscribes to the cloud scanning service 1 in response to an input operation performed by the user on the cloud scanning service 1.

In this embodiment of this application, after the APP 1 of the electronic device 100 is started, the APP 1 invokes a Bluetooth chip to start a beacon scanning task 1 of the cloud scanning service 1.

S402: The APP 1 of the electronic device 100 sends an instruction 1 to Nearby, where the instruction 1 instructs to register the beacon scanning task 1 of the cloud scanning service 1, the instruction 1 includes a beacon parameter 1, and the beacon parameter 1 includes one or more of the following data of the cloud scanning service 1: a namespace, a message type, and a beacon ID prefix.

In some embodiments, after the APP 1 is installed on the electronic device 100, the APP 1 prestores the beacon parameter 1 of the cloud scanning service 1, or the APP 1 may obtain the beacon parameter 1 of the cloud scanning service 1 from the cloud server 300.

In some embodiments, the beacon device continuously sends a beacon broadcast packet at a specified broadcast interval, the beacon scanning task 1 is used to scan a beacon broadcast packet of a registered beacon device of the cloud scanning service 1, and the beacon broadcast packet includes a beacon ID.

The beacon ID is used to uniquely identify a beacon device. The beacon device supports two protocols: the iBeacon protocol and the Eddystone protocol. A beacon ID of a beacon device is generated according to the following rules: (1) A beacon ID of a beacon device of an iBeacon type includes a proximity universally unique identifier (Proximity Universally Unique Identifier, Proximity UUID), a major (Major), and a minor (Minor). (2) A beacon ID of a beacon device of an Eddystone type includes a Namespace ID and an instance (Instance) ID. In this embodiment of this application, fields that form beacon IDs according to the two protocols may alternatively be defined by an application developer or a terminal user. The beacon ID prefix may be used to obtain, through filtering, a registered beacon device belonging to a same beacon scanning service. The beacon ID prefix may be obtained from the beacon ID according to a preset rule. For example, a beacon ID prefix of the beacon device of the iBeacon type may be a UUID in the beacon ID, and a beacon ID prefix of the beacon device of the Eddystone type may be a NameSpace ID in the beacon ID. Alternatively, the beacon ID prefix may be defined by an application developer or a terminal user based on the beacon ID.

For example, the beacon ID of the beacon device of the iBeacon type is "14a01af0232a45189c0e899aabbceddeeff03e82711". A UUID in the beacon ID is "14a01af0-232a-4518-9c0e-899a-abbceddeeff0", a Major value is "(short)0x3e8", a Minor value is "(short)0x2711", and a beacon ID prefix of the beacon ID is "14a01af0-232a-4518-9c0e-899a-abbceddeeff0".

For example, the beacon ID of the beacon device of the Eddystone type is "5dc33487fD2e477d40580117c5986919". A namespace ID in the beacon ID is "5dc33487f02e477d4058", an Instance ID is "0117c5986919", and a beacon ID prefix of the beacon ID is "5dc33487f02e477d40".

S403: Nearby of the electronic device 100 sends a request message 1 to the cloud server 300, where the request message 1 is used to detect validity of the beacon parameter 1.

In some embodiments, one cloud scanning service corresponds to one beacon parameter. In an implementation, based on the request message 1, the cloud server 300 may query whether there is a beacon parameter corresponding to a cloud scanning service the same as the beacon parameter 1. If there is a beacon parameter corresponding to a cloud scanning service the same as the beacon parameter 1, the beacon parameter 1 is valid.

It may be understood that if the electronic device 100 communicates with the cloud server 300 via a communication module 1 (for example, a mobile communication module, a Wi-Fi chip, or a Bluetooth chip), Nearby sends the request message 1 to the cloud server 300 by invoking the communication module 1.

S404: When the beacon parameter 1 is valid, the cloud server 300 sends a response message 2 to Nearby of the electronic device 100, where the response message 2 indicates that the beacon parameter 1 is valid, and the response message 2 carries a filter condition 1 and a callback condition 1 of the beacon scanning task 1, where the filter condition 1 is used to obtain, through filtering, a packet from a beacon device that has been registered with the cloud scanning service 1, and the callback condition is used to control a callback frequency at which packets of a same beacon device are called back to an AP.

The filter condition 1 indicates a value of one or more of the following filter fields: a namespace, a message type, a beacon ID prefix, and message content. The filter condition 1 includes: A Bluetooth packet obtained through scanning carries a filter field indicated by the filter condition 1, and a value of the filter field is the same as a value of the filter field indicated by the filter condition 1.

In some embodiments, as shown in FIG. 5, Nearby includes a subscription module and a Bluetooth scanning task management module. That the APP 1 invokes Nearby to start a beacon scanning task includes: (1) When the APP 1 of the electronic device 100 is started, the APP 1 invokes the subscription module of Nearby to subscribe to the cloud scanning service 1, and the beacon parameter 1 of the cloud scanning service 1 is sent to the subscription module. The subscription module detects validity of the beacon parameter 1 to the cloud server 300. When the beacon parameter 1 is valid, the subscription module invokes the Bluetooth task management module to register the beacon scanning task 1 of the cloud scanning service 1.

Steps S403 and S404 are optional. In some embodiments, validity of the beacon parameter 1 does not need to be detected.

S405: Nearby invokes the Bluetooth chip to start the beacon scanning task 1.

In some embodiments, as shown in FIG. 5, step S405 includes: (3) The Bluetooth task management module of Nearby invokes a Framework interface of a Bluetooth service to start the beacon scanning task 1; and (4) the Bluetooth service delivers the beacon scanning task 1 to the Bluetooth chip via a Bluetooth driver at an HAL layer, and the Bluetooth chip continuously performs Bluetooth scanning based on the beacon scanning task 1.

S406: Nearby sends an instruction 3 to Sensorhub, where the instruction 3 instructs Sensorhub to perform filtering and callback on the beacon scanning task 1, and the instruction 3 carries the callback condition 1 and the filter condition 1.

In some embodiments, as shown in FIG. 5, step S406 includes: (3) The Bluetooth task management module invokes an MLPS interface to deliver the callback condition 1 and the filter condition 1 to the MLPS; and (4) the MLPS transparently transmits the callback condition 1 and the filter condition 1 to Sensorhub. Sensorhub sets, based on the filter condition 1, a beacon filter corresponding to the beacon scanning task 1. The beacon filter is configured to obtain, through filtering, a beacon packet of a registered beacon device of the cloud scanning service 1, that is, a beacon packet that meets the filter condition 1.

S407: Sensorhub sends an instruction 4 to the Bluetooth chip based on the instruction 3, where the instruction 4 instructs the Bluetooth chip to switch a scanning callback channel to Sensorhub.

In some embodiments, the instruction 4 instructs the Bluetooth chip to switch a scanning callback channel of the beacon scanning service to Sensorhub, and Sensorhub is only used to implement packet filtering of the beacon scanning service. Packet filtering of another Bluetooth scanning service is implemented by the Bluetooth chip, and the Bluetooth chip directly calls back the another Bluetooth scanning service obtained through scanning and filtering to the AP. In some embodiments, the instruction 4 instructs the Bluetooth chip to switch callback channels of all packets obtained through scanning and filtering to Sensorhub. Sensorhub is not only used to implement packet filtering of the beacon scanning service, but also used to implement packet filtering of another Bluetooth scanning service, that is, a filter corresponding to the another Bluetooth scanning service is set.

In some embodiments, as shown in FIG. 5, step S407 includes: (5) Sensorhub indicates the Bluetooth chip to switch the scanning callback channel to Sensorhub. So far, the beacon scanning task 1 is successfully started. The Bluetooth chip continuously performs beacon broadcast scanning in the background of the device, and Sensorhub continuously performs filtering and callback on the Bluetooth packet reported by the Bluetooth chip.

It may be understood that the electronic device 100 may start beacon scanning tasks corresponding to a plurality of beacon scanning services. Correspondingly, Sensorhub sets a corresponding beacon filter based on a filter condition of each beacon scanning task, and sets, based on a callback condition of each beacon scanning task, a callback condition corresponding to the beacon scanning task. In some embodiments, different beacon scanning tasks may correspond to different callback conditions. In some embodiments, all beacon scanning tasks of the APP/APP 1 share one callback condition, and the callback condition needs to be delivered to Sensorhub only once. For example, Nearby delivers the callback condition 1 to Sensorhub when registering a beacon scanning task of the APP 1 for the first time, and Nearby does not need to deliver a callback condition again when registering a beacon scanning task of the APP 1 subsequently. In some embodiments, the APP 1 or the electronic device 100 prestores a common callback condition 1. In step S404, the cloud server 300 does not need to deliver the callback condition 1 to the electronic device 100.

Phase 2: Scan and parse the beacon ID of the beacon device 200, and perform a preset function 1 based on the message attachment 1 corresponding to the beacon ID.

S408: The Bluetooth chip obtains a Bluetooth packet 1 through scanning.

S409: The Bluetooth chip matches the Bluetooth packet 1 with a general filter 1; and if the Bluetooth packet 1 successfully matches the general filter 1, perform a next step.

S410: The Bluetooth chip reports the Bluetooth packet 1 to Sensorhub.

In some embodiments, as shown in FIG. 5, after the scanning callback channel of the beacon scanning task is switched, (6) the Bluetooth chip reports a beacon packet/beacon broadcast packet obtained through scanning to Sensorhub.

In some embodiments, in step 405, when invoking the Bluetooth chip to start the beacon scanning and registration task 1, Nearby further delivers a filter condition 4 to the Bluetooth chip. The Bluetooth chip sets the general filter 1 based on the condition, and the general filter 1 is configured to obtain, through filtering, a beacon packet/beacon broadcast packet of the beacon device. The Bluetooth chip preliminarily filters the Bluetooth packet obtained through scanning by using the general filter 1, and reports the Bluetooth packet obtained through filtering to Sensorhub. The general filter 1 is set on the Bluetooth chip, so that an irrelevant Bluetooth packet can be preliminarily filtered out, and only a beacon packet/beacon broadcast packet required by the beacon scanning service is reported to Sensorhub, to reduce power consumption of Sensorhub. In addition, one general filter consumes less hardware resources of the Bluetooth chip.

In an implementation, the general filter 1 is configured to obtain a beacon packet through filtering, and the beacon broadcast packet carries a beacon device type (Beacon type). The filter condition 4 indicated by the general filter 1 includes: The Bluetooth packet obtained through scanning includes the beacon device type.

In an implementation, the general filter 1 is configured to obtain a beacon broadcast packet through filtering, and a destination MAC address of the broadcast packet is usually a preset address (for example, all preset addresses are 1/F). The filter condition 4 indicated by the general filter 1 includes: The Bluetooth packet obtained through scanning includes the beacon device type, and the destination MAC address is the preset address.

In some embodiments, the instruction 4 instructs the Bluetooth chip to switch the scanning callback channel of the beacon scanning service to Sensorhub. For another packet that does not meet the general filter 1, the Bluetooth chip may call back the packet to the AP based on an existing solution.

It should be noted that, when the short-range scanning method provided in this embodiment of this application is applied to another short-range communication service, a general filter corresponding to the service may alternatively be set in a short-range communication module, and the general filter is configured to filter a short-range communication packet from a related device of the service.

In some embodiments, the instruction 4 instructs the Bluetooth chip to switch scanning callback channels of all services to Sensorhub. S409 does not need to be performed, and the Bluetooth chip directly calls back a Bluetooth packet obtained through scanning to Sensorhub.

S411: Sensorhub matches the Bluetooth packet 1 with a beacon filter corresponding to each beacon scanning task; and if the Bluetooth packet 1 successfully matches at least one beacon filter, perform a next step.

In some embodiments, the instruction 4 instructs the Bluetooth chip to switch the scanning callback channel of the beacon scanning service to Sensorhub. In step S411, if the Bluetooth packet 1 does not match the beacon filter, the packet is discarded.

The filter condition 1 of the beacon scanning task 1 indicates a value of one or more of the following filter fields: a namespace, a message type, a beacon ID prefix, and message content. The beacon filter 1 corresponding to the beacon scanning task 1 is used as an example. The Bluetooth packet 1 is matched with the beacon filter 1, that is, whether the Bluetooth packet 1 meets the filter condition 1 is determined. If the Bluetooth packet 1 meets the filter condition 1, the Bluetooth packet 1 successfully matches the beacon filter 1. Specifically, Sensorhub may parse the Bluetooth 1, and extract a filter field from the Bluetooth packet 1 based on a format of the beacon broadcast packet. If the Bluetooth packet 1 includes all the filter fields indicated by the filter condition 1, and each filter field matches the filter field indicated by the filter condition 1, the Bluetooth packet 1 successfully matches the beacon filter.

When a first filter field is any filter field indicated by the filter condition 1, and the first filter field is one of the namespace, the message type, and the beacon ID prefix, that the first filter field carried in the packet matches the first filter field indicated by the filter condition 1 includes: A value of the first filter field carried in the packet is the same as a value of the first filter field indicated by the filter condition 1. When the first filter field is message content, that the first filter field carried in the packet matches the first filter field indicated by the filter condition 1 includes: Message content carried in the packet includes message content indicated by the filter condition 1. For example, the message content indicated by the filter condition 1 is one or more keywords, for example, "discount". When the message content carried in the packet includes the one or more keywords, the message content carried in the packet matches the message content indicated by the filter condition 1.

In some embodiments, the filter field indicated by the filter condition 1 includes only the beacon ID prefix, that is, a beacon ID prefix (for example, a UUID) based on the iBeacon protocol or a beacon ID prefix (for example, a namespace ID) based on the Eddystone protocol. If a beacon ID prefix in the Bluetooth packet 1 is the same as a beacon ID prefix indicated by the filter condition 1, the Bluetooth packet 1 successfully matches the beacon filter 1.

In some embodiments, in step S406, Nearby further delivers a filter condition 3 corresponding to the beacon scanning task 1 to Sensorhub, and the filter condition 3 is used to indicate a filter condition 3 that needs to be met by a scenario characteristic of a scenario in which the electronic device is located in the cloud scanning service 1. Sensorhub further sets a scenario filter based on the filter condition 3, or sets the beacon filter 1 based on the filter condition 1 and the filter condition 3. The beacon filter 1 integrates a function of the scenario filter. Specifically, the scenario characteristic may include a characteristic of the electronic device 100 (for example, a distance, an orientation, a speed, and a distance change trend relative to the beacon device), and may further include an environment characteristic (for example, weather, a temperature, and a place). It may be understood that, only when the scenario characteristic of the scenario in which the electronic device 100 is located meets the filter condition 3, the electronic device 100 provides a related function of the cloud scanning service 1 for the user, and Sensorhub reports the Bluetooth packet 1 to the AP.

For example, the filter condition 3 includes: The distance between the electronic device 100 and the beacon device gradually decreases, and the distance is less than a preset distance. The beacon device 200 is disposed next to a product 1 in a shopping mall. The APP 1 of the electronic device 100 pushes information about the product corresponding to the beacon device 200 when the user gradually approaches the beacon device 200 and is close to the beacon device 200. Specifically, the Bluetooth chip of the electronic device 100 obtains the beacon broadcast packet of the beacon device 200 through scanning, and detects a distance between the electronic device 100 and the beacon device 200 and a distance change trend based on the received beacon broadcast packet. When determining that the distance and the distance change trend meet the filter condition 3, Sensorhub determines that the beacon broadcast packet matches the scenario filter of the beacon scanning task 1.

For example, the filter condition 3 includes: The weather is rainy. Before the AP enters a sleep mode, the APP 1 delivers weather information of a current day to Sensorhub. The beacon device 200 is disposed beside an umbrella sharing apparatus. The APP 1 of the electronic device 100 pushes discount information of a shared umbrella only when the user is close to the beacon device 200 and the weather is rainy. Specifically, the Bluetooth chip of the electronic device 100 obtains the beacon broadcast packet of the beacon device 200 through scanning, and detects a distance between the electronic device 100 and the beacon device 200 based on the received beacon broadcast packet. When determining that the distance and the weather of the current day meet the filter condition 3, Sensorhub determines that the beacon broadcast packet matches the scenario filter of the beacon scanning task 1.

S412: Sensorhub determines whether the Bluetooth packet 1 meets the callback condition 1; and if the Bluetooth packet 1 meets the callback condition 1, perform a next step; otherwise, discard the packet.

In a subsequent embodiment, the callback control in step S412 is described in detail, and details are not described herein.

S413: After the AP is woken up, Sensorhub reports the Bluetooth packet 1 to Nearby in the AP.

An execution sequence of steps S411 and S412 is not specifically limited in this embodiment of this application. Alternatively, S412 may be performed before S411.

Step S412 is optional. In some embodiments, in step S406, the callback condition 1 does not need to be delivered, and S412 does not need to be performed. In step S411, Sensorhub matches the Bluetooth packet with the beacon filter; and if the Bluetooth packet successfully matches the beacon filter, S413 is performed to call back the packet to the AP; otherwise, the packet is discarded.

Step S411 is optional. In some embodiments, in step S406, the filter condition 1 does not need to be delivered, and S411 does not need to be performed. After the Bluetooth packet reported by the Bluetooth chip is received, S412 is directly performed. In step S412, Sensorhub matches the Bluetooth packet 1 with the callback condition 1; and if the Bluetooth packet 1 successfully matches the callback condition 1, the packet is called back to the AP; otherwise, the packet is discarded.

In some embodiments, in step S413, Sensorhub actively wakes up the AP, and reports the Bluetooth packet 1; or Sensorhub buffers the Bluetooth packet 1 and reports the Bluetooth packet 1 to the AP after the AP is woken up in another manner.

In some embodiments, as shown in FIG. 5, step S413 includes: (7) After the AP is woken up, Sensorhub calls back the Bluetooth packet 1 to the MLPS. (8) The MLPS further calls back the Bluetooth packet 1 to the Bluetooth scanning task management module of Nearby.

S414: Nearby sends a request message 2 to the cloud server 300, where the request message 2 includes a beacon ID 1 in the Bluetooth packet 1.

S415: The cloud server 300 sends, to Nearby, the message attachment 1 corresponding to the beacon ID 1.

In this embodiment of this application, after receiving the Bluetooth packet 1 (for example, the beacon broadcast packet of the beacon device 200), Nearby parses the beacon ID 1 in the packet, and invokes an REST API provided by a Nearby cloud service to query the cloud server 300 for the message attachment corresponding to the beacon ID 1. The cloud server 300 queries a beacon database for the message attachment corresponding to the beacon ID 1, and replies to a subscriber, that is, Nearby of the electronic device 100, with all found message attachments at a time.

In some embodiments, as shown in FIG. 5, step S414 includes: (9) After the AP is woken up, the message management module of Nearby requests a Nearby cloud server to query the message attachment 1 corresponding to the beacon ID 1. Step S415 includes: (10) The Nearby cloud server feeds back the message attachment 1 to the message management module of Nearby.

S416: Nearby sends the message content in the message attachment 1 to the APP 1.

In some embodiments, as shown in FIG. 5, step S416 includes: (11) After the AP is woken up, a notification module of Nearby sends the message content in the message attachment 1 to the APP 1. It may be understood that Nearby may identify, based on a filter field carried in the Bluetooth packet 1, a beacon scanning service for which the Bluetooth packet 1 is intended, and may further report message content of a message attachment corresponding to the Bluetooth packet 1 to an APP corresponding to the beacon scanning service, for example, the APP 1 corresponding to the beacon scanning service 1.

S417: The APP 1 performs the preset function 1 based on the message content in the message attachment 1.

The preset function 1 is not specifically limited in this embodiment of this application. In some embodiments, in the information push scenario, the preset function 1 includes: The APP 1 may output push information 1 based on the message content in the message attachment 1. For example, with reference to related descriptions in FIG. 3A to FIG. 3D, the Bluetooth packet 1 is a beacon broadcast packet of the beacon device 200 of the gas station, message content in the message attachment 1 corresponding to the beacon ID of the beacon device indicates refueling discount information, and the wallet APP pushes the refueling discount information to the user based on the message content. For example, the wallet APP displays a widget 102 shown in FIG. 3A, and the widget 102 displays the refueling discount information.

In some embodiments, in a positioning scenario, the message content in the message attachment 1 indicates a location of the beacon device 200. The preset function 1 includes: The APP 1 determines a location of the electronic device 100 based on the location of the beacon device 200 in the message attachment 1, and displays the location of the electronic device 100 on a map. Specifically, a distance and an orientation of the electronic device 100 relative to the beacon device 200 may be determined based on a signal parameter (for example, a received signal strength and a signal arrival angle) of the received Bluetooth packet 1. Further, the location of the electronic device 100 is determined based on the location of the beacon device 200 in the message content, the distance, and the orientation.

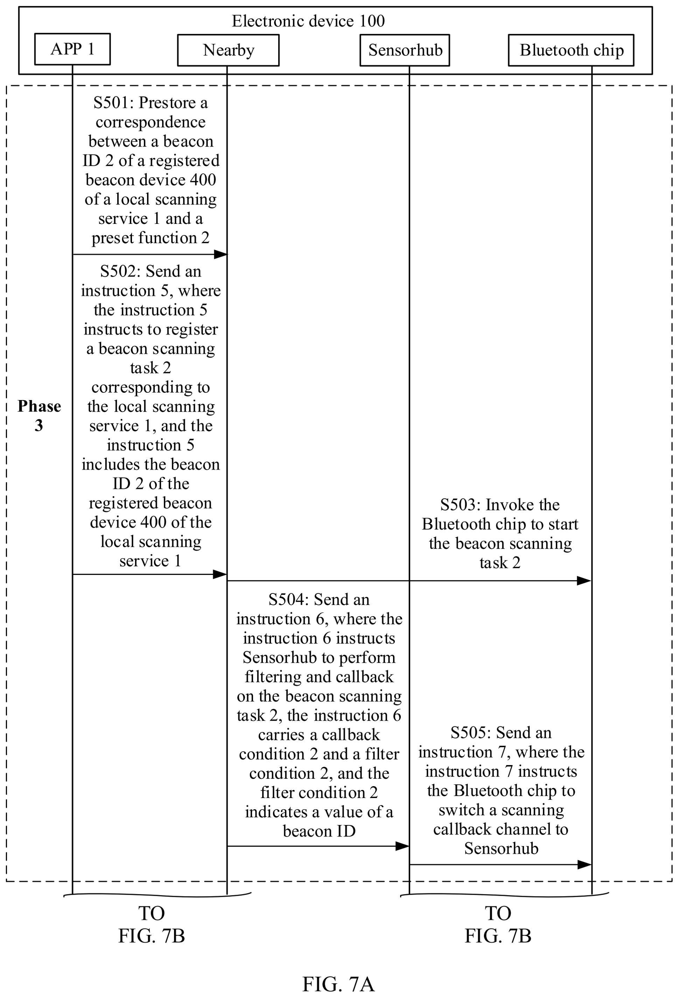

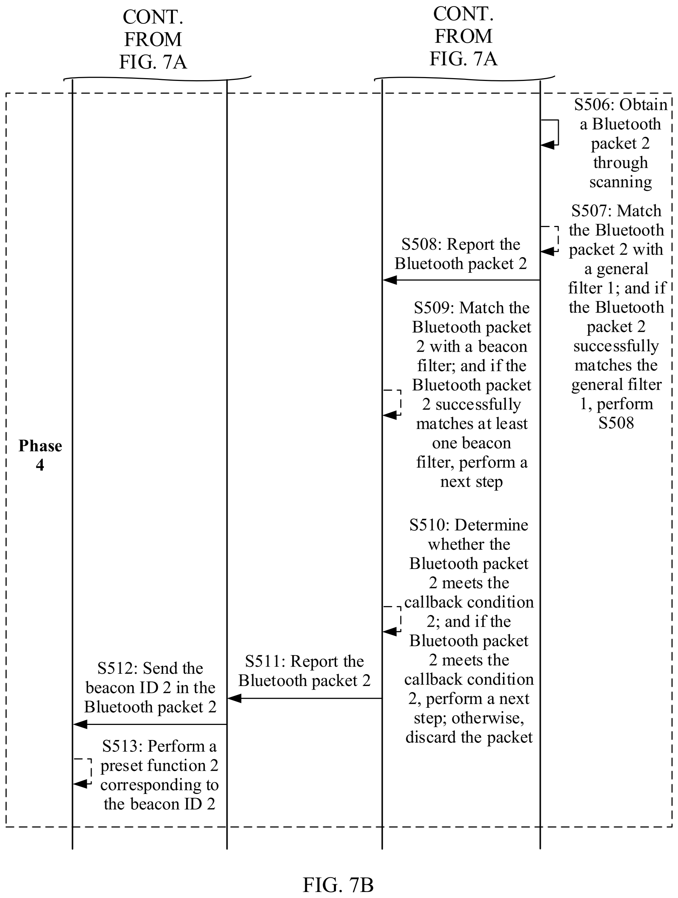

For example, for a local scanning service of a beacon, FIG. 7A and FIG. 7B are a schematic flowchart of a short-range scanning method. The short-range scanning method includes but is not limited to step S501 to step S513.

Phase 3: Register a beacon device of the local scanning service, and start a beacon scanning task.

S501: An APP 1 of an electronic device 100 prestores a correspondence between a beacon ID 2 of a registered beacon device 400 of a local scanning service 1 and a preset function 2.

An application developer of the APP 1 sets the preset function 2 (for example, vehicle door unlocking) of the local scanning service 1 for the APP 1. In some embodiments, after the electronic device 100 installs and starts the APP 1, the APP 1 may automatically subscribe to the local scanning service 1, that is, provide the preset function 2 of the local scanning service 1. In some embodiments, after the electronic device 100 installs and starts the APP 1, the local scanning service 1 is subscribed to only after an input operation used to enable the preset function 2 is received. For example, with reference to related descriptions in FIG. 3A to FIG. 3E, the vehicle APP is provided with the switch control 304 for beacon intelligent unlocking. When an input operation of controlling the switch control 304 to switch to an on state is detected, the APP 1 subscribes to the local scanning service 1 corresponding to the function and provides a vehicle door unlocking function.

That the APP 1 registers the beacon device 400 of the local scanning service 1 includes storing a correspondence 1 between the beacon ID 2 of the registered beacon device 400 and the preset function 2. The APP 1 of the electronic device 100 may register one or more beacon devices of at least one local scanning service, and preset functions corresponding to different beacon devices may be the same or may be different. The preset function 2 corresponding to the beacon ID 2 may be set by a user, or may be preset by the APP 1 or the electronic device 100. This is not specifically limited herein.

In some embodiments, that the APP 1 registers the beacon device 400 of the local scanning service 1 includes: The user places the electronic device 100 close to a beacon device 400 of interest, and the electronic device 100 and the beacon device 400 perform pairing and Bluetooth connection. After the Bluetooth connection is successfully established, the APP 1 registers the beacon device 400 as a beacon device of the local scanning service 1, and stores the correspondence 1 between the beacon ID 2 of the beacon device 400 and the preset function 2.

In some embodiments, that the APP 1 registers the beacon device 400 of the local scanning service 1 includes: The beacon device 400 is deployed on an electronic device 500 (for example, a vehicle), and the electronic device 500 stores the beacon ID 2 of the beacon device 400. After the electronic device 100 establishes a connection to the electronic device 500, the electronic device 500 sends the beacon ID 2 of the beacon device 400 to the electronic device 100. The APP 1 registers the beacon device 400 as a beacon device of the local scanning service 1, and stores the correspondence 1 between the beacon ID 2 of the beacon device 400 and the preset function 2. A connection manner between the electronic device 500 and the electronic device 100 is not specifically limited herein. For example, the APP 1 is the vehicle APP, and the vehicle APP of the electronic device 100 provides a function of adding a vehicle. The beacon device 400 is deployed on a vehicle 1, and the preset function 2 corresponding to the beacon ID of the beacon device 400 is vehicle door unlocking. The vehicle APP adds the vehicle 1 based on an input operation of adding the vehicle 1 by the user. After the vehicle 1 is added, the vehicle APP of the electronic device 100 obtains the beacon ID 2 of the beacon device 400 from the vehicle 1, and stores the correspondence 1 between the beacon ID 2 and the preset function 2.

In some embodiments, that the APP 1 registers the beacon device 400 of the local scanning service 1 includes: An application server of the APP 1 prestores a beacon ID 2 of a registered beacon device (for example, the beacon device 400). After the APP 1 is installed on the electronic device 100, the application server of the APP 1 automatically delivers the correspondence 1 between the beacon ID 2 of the registered beacon device 400 and the preset function 2 to the electronic device 100.

An implementation in which the APP 1 of the electronic device 100 subscribes to the local scanning service and registers the beacon device 400 is not specifically limited in this embodiment of this application.

S502: The APP 1 of the electronic device 100 sends an instruction 5 to Nearby, where the instruction 5 instructs to register a beacon scanning task 2 corresponding to the local scanning service 1, and the instruction 5 includes the beacon ID 2 of the registered beacon device 400 of the local scanning service 1.

S503: Nearby invokes a Bluetooth chip to start the beacon scanning task 2.

S504: Nearby sends an instruction 6 to Sensorhub, where the instruction 6 instructs Sensorhub to perform filtering and callback on the beacon scanning task 2, and the instruction 6 carries a callback condition 2 and a filter condition 2. The filter condition 2 indicates a value of a beacon ID, the filter condition 2 is used to filter a Bluetooth packet reported by the Bluetooth chip, and the callback condition 2 is used to control a callback frequency of a same beacon device.

S505: Sensorhub sends an instruction 7 to the Bluetooth chip based on the instruction 6, where the instruction 7 instructs the Bluetooth chip to switch a scanning callback channel to Sensorhub.

So far, the beacon scanning task 2 is successfully started. The Bluetooth chip continuously performs beacon broadcast scanning in the background of the device, and Sensorhub continuously performs filtering and callback on the Bluetooth packet reported by the Bluetooth chip.

For specific implementations of steps S502 to S505, refer to related descriptions of steps S402, S405, and S406. Details are not described herein again.

Phase 4: Scan and parse the beacon ID 2 of the beacon device 400, and perform the preset function 2 corresponding to the beacon ID 2.

S506: The Bluetooth chip obtains a Bluetooth packet 2 through scanning.

S507: The Bluetooth chip matches the Bluetooth packet 2 with a general filter 1; and if the Bluetooth packet 2 successfully matches the general filter 1, perform S508.

S508: The Bluetooth chip reports the Bluetooth packet 2 to Sensorhub.

S509: Sensorhub matches the Bluetooth packet 2 with a beacon filter corresponding to each beacon scanning task; and if the Bluetooth packet 2 successfully matches at least one beacon filter, perform a next step.

In this embodiment of this application, if a beacon ID in the Bluetooth packet 2 is the same as a beacon ID indicated by a beacon filter, the Bluetooth packet 2 successfully matches the beacon filter.

S510: Sensorhub determines whether the Bluetooth packet 2 meets the callback condition 2; and if the Bluetooth packet 2 meets the callback condition 2, perform a next step; otherwise, discard the packet.

S511: After an AP is woken up, Sensorhub reports the Bluetooth packet 2 to Nearby in the AP.

For specific implementations of steps S506 to S511, refer to related descriptions of steps S408, S405, and S406. Details are not described herein again.

S512: Nearby sends the beacon ID 2 in the Bluetooth packet 2 to the APP 1.

S513: The APP 1 performs the preset function 2 corresponding to the beacon ID 2.

For example, the APP 1 is the vehicle APP, and the preset function 2 includes vehicle door unlocking. In the intelligent unlocking scenario described with reference to FIG. 3A to FIG. 3E, the beacon device 400 is deployed at a door of the vehicle 1. When scanning and parsing the beacon ID 2 of the beacon device 400, the vehicle APP of the electronic device 100 sends an instruction to a vehicle-mounted device of the vehicle 1. The instruction instructs the vehicle-mounted device 1 to control the vehicle door to be unlocked.

In this embodiment of this application, a related function of scanning and filtering and/or packet callback of the beacon device is proxied to Sensorhub with low power consumption. When the AP is not woken up, a packet obtained through scanning is filtered in Sensorhub based on a unified scanning and filtering field, and a beacon broadcast packet of a registered beacon device of a subscribed beacon scanning service is obtained through filtering, to shield AP wake-up caused by an unrelated beacon broadcast of a non-beacon device and an unregistered beacon device, to effectively reduce power consumption of the electronic device 100. In addition, a quantity of requests to a Nearby cloud interface can be reduced in a cloud scanning service.

Because the beacon device continuously sends a Bluetooth broadcast, after entering a beacon broadcast range, the electronic device continuously obtains a beacon broadcast packet through scanning, and further continuously calls back an upper-layer service. The AP is frequently woken up. In this embodiment, frequency control is performed on broadcast packets of a same beacon device in Sensorhub, to reduce a frequency of waking up the AP, and control power consumption.

In some embodiments, the callback condition 1 in step S412 is the same as the callback condition 2 in step S510. The callback condition 1 includes: A Bluetooth packet 1 is discovered for the first time; or a Bluetooth packet 1 is not discovered for the first time, and a time difference between a time 1 and a time 2 at which the Bluetooth packet 1 is called back to the AP last time is less than a time threshold 1.

Sensorhub caches the time 1 and the time 2. In some embodiments, the time 1 is a time at which the Bluetooth chip currently receives the Bluetooth packet 1, and the time 2 is also a time at which the Bluetooth chip receives the Bluetooth packet 1. In some embodiments, the time 1 is a time at which Sensorhub currently obtains the Bluetooth packet 1 reported by the Bluetooth chip, and the time 2 is also a time at which Sensorhub obtains the Bluetooth packet 1 reported by the Bluetooth chip. In some embodiments, the time 1 is a current moment, and the time 2 is also a time at which Sensorhub calls back the Bluetooth packet 1 to the AP most recently.

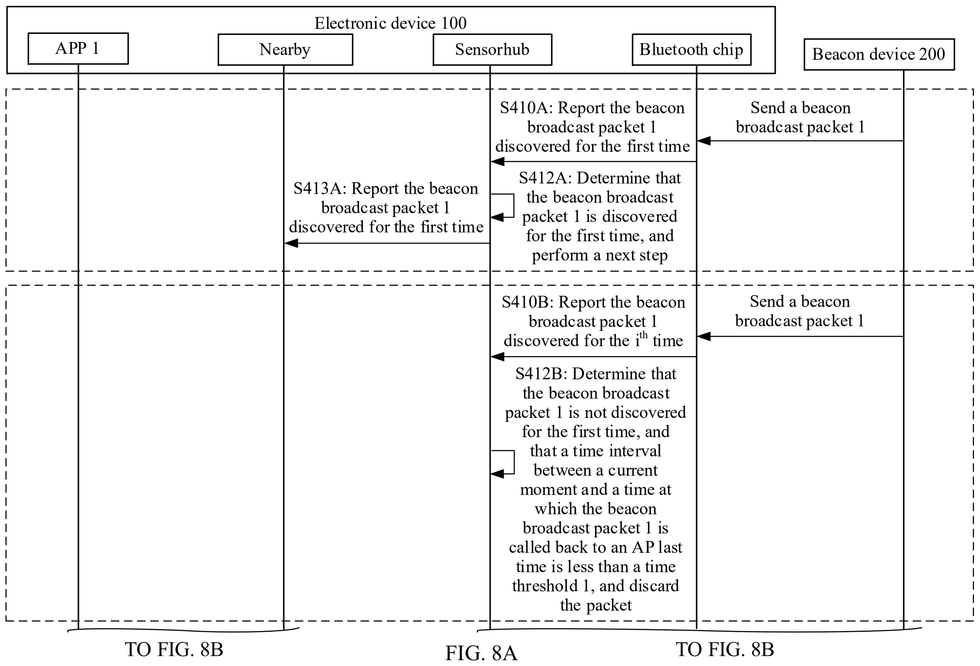

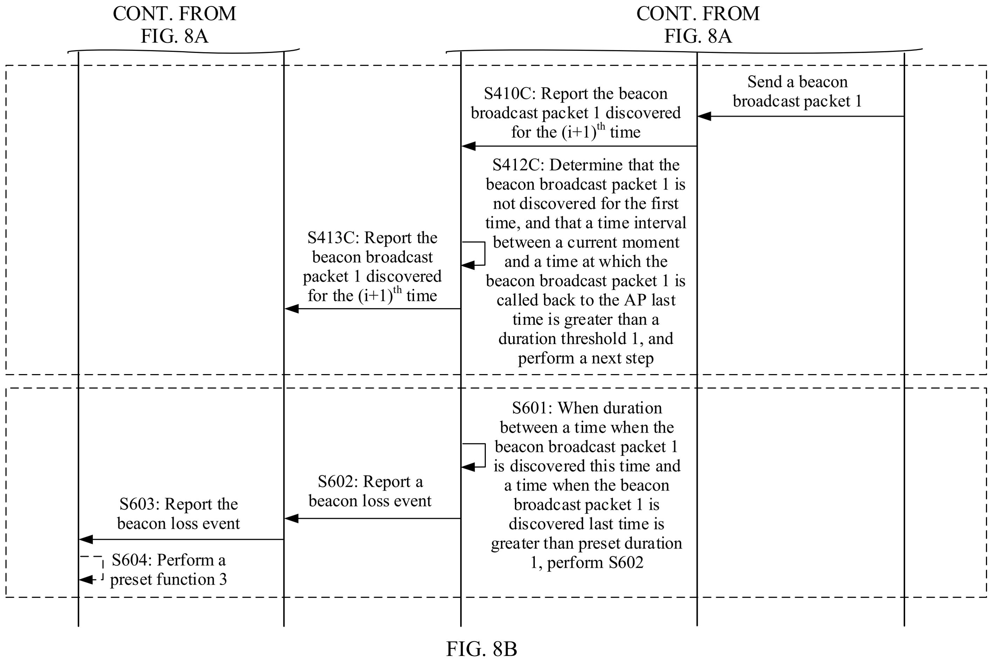

For example, as shown in FIG. 8A and FIG. 8B, the following describes callback control logic of the beacon broadcast packet by using a short-range scanning procedure of the callback condition 1, the beacon device 200, and the cloud scanning service 1 as an example.

The beacon device 200 is a beacon device 200 registered with the cloud scanning service 1. The beacon broadcast packet sent by the beacon device 200 may match the foregoing general filter, or may match a beacon filter corresponding to the cloud scanning service 1. The beacon device 200 continuously sends a beacon broadcast packet 1 (that is, the Bluetooth packet 1) at a broadcast interval 1. After the Bluetooth chip of the electronic device 100 starts a beacon scanning task, if the electronic device 100 is near the beacon device 200 (that is, within a Bluetooth broadcast coverage of the beacon device 200), the Bluetooth chip may continuously scan the beacon broadcast packet 1, and continuously report the beacon broadcast packet 1 to Sensorhub.

In some embodiments, as shown in FIG. 8A, the electronic device 100 discovers the beacon broadcast packet 1 of the beacon device 200 for the first time. Step S410 is specifically step S410A, step S412 is specifically step S412A, and step S413 is specifically step S413A.

S410A: The Bluetooth chip reports the beacon broadcast packet 1 discovered for the first time to Sensorhub.

S412A: Sensorhub determines that the beacon broadcast packet 1 is discovered for the first time; and if the beacon broadcast packet 1 meets the callback condition 1, perform a next step (for example, call back the beacon broadcast packet 1 discovered this time to the AP).

In some embodiments, Sensorhub caches a beacon ID of a Bluetooth packet called back to the AP. If a beacon ID of a cached packet is the same as a beacon ID of the beacon broadcast packet 1, it is determined that the beacon broadcast packet 1 is not discovered for the first time; otherwise, it is determined that the beacon broadcast packet 1 is discovered for the first time.

In some embodiments, Sensorhub caches a beacon ID and a MAC address of a Bluetooth packet called back to the AP. If a beacon ID and a MAC address of a cached packet are respectively the same as a beacon ID and a MAC address of the beacon broadcast packet 1, it is determined that the beacon broadcast packet 1 is not discovered for the first time; otherwise, it is determined that the beacon broadcast packet 1 is discovered for the first time.

In some embodiments, Sensorhub caches a Bluetooth packet called back to the AP. If packet content of a cached packet is completely the same as packet content of the beacon broadcast packet 1, it is determined that the beacon broadcast packet 1 is not discovered for the first time; otherwise, it is determined that the beacon broadcast packet 1 is discovered for the first time.

In some embodiments, the beacon broadcast packet 1 called back by Sensorhub to the AP is a Bluetooth packet that matches one or more of the general filter, the beacon filter, and a scenario filter.

S413A: Sensorhub reports the beacon broadcast packet 1 discovered for the first time to Nearby in the AP.

In some embodiments, as shown in FIG. 8A, the electronic device 100 discovers the beacon broadcast packet 1 of the beacon device 200 for the i^{th} time. Step S410 is specifically step S410B, and step S412 is specifically step S412B.

S410B: The Bluetooth chip reports the beacon broadcast packet 1 discovered for the i^{th} time to Sensorhub.

S412B: Sensorhub determines that the beacon broadcast packet 1 is not discovered for the first time, the time interval between the time 1 and the time 2 at which the beacon broadcast packet 1 is called back to the AP last time is less than the time threshold 1, and the beacon broadcast packet 1 does not meet the callback condition 1. In this case, the packet is discarded.

In some embodiments, as shown in FIG. 8B, the electronic device 100 discovers the beacon broadcast packet 1 of the beacon device 200 for the (i+1)^{th} time. Step S410 is specifically step S410C, step S412 is specifically step S412C, and step S413 is specifically step S413C.

S410C: The Bluetooth chip reports the beacon broadcast packet 1 discovered for the (i+1)^{th} time to Sensorhub.

S412C: Sensorhub determines that the beacon broadcast packet 1 is not discovered for the first time, the time interval between the time 1 and the time 2 at which the beacon broadcast packet 1 is called back to the AP last time is greater than the time threshold 1, and the beacon broadcast packet 1 meets the callback condition 1. In this case, a next step is performed.

S413C: Sensorhub reports the beacon broadcast packet 1 discovered for the (i+1)^{th} time to Nearby in the AP.

In this embodiment of this application, by detecting "the Bluetooth packet discovered for the first time" and "controlling a callback interval of the Bluetooth packet" in Sensorhub, continuous Bluetooth callback caused by continuous broadcasting of a same beacon device can be greatly reduced, a quantity of times of waking up the AP is significantly reduced, and device power consumption is reduced.

In some embodiments, beacon loss logic is further added. After the beacon broadcast packet 1 of the beacon device 200 is discovered, when the beacon broadcast packet 1 is not discovered again within preset duration 1, Sensorhub may report a beacon loss event of the beacon device 200 to the AP in time. The APP may perform a preset function 3 based on the beacon loss event of the beacon device 200. The preset function 3 is not specifically limited in this embodiment of this application. For example, the APP 1 is the vehicle APP, and the beacon device 200 is configured to trigger unlocking of the vehicle door. After receiving the beacon loss event of the beacon device 200 reported by Sensorhub, if the vehicle APP detects that the vehicle door is not locked, the vehicle APP outputs prompt information, to prompt the user to lock the vehicle door in time.

As shown in FIG. 8A and FIG. 8B, in the short-range scanning method provided in this embodiment of this application, after the beacon broadcast packet 1 is discovered for the first time in step S410A, the beacon callback control procedure further includes steps S601 to S604.

S601: When Sensorhub determines that duration between a time when the beacon broadcast packet 1 is discovered this time and a time when the beacon broadcast packet 1 is discovered last time is greater than the preset duration 1, perform S602.

S602: Sensorhub reports the beacon loss event of the beacon device 200 to Nearby in the AP.

The beacon loss event of the beacon device 200 reported by Sensorhub to Nearby carries the beacon ID of the beacon device 200.

S603: Nearby notifies the APP 1 of the beacon loss event.

S604: The APP1 performs the preset function 3 based on the beacon loss event.

To implement "beacon loss logic", a timer with the preset duration 1 needs to be set. To implement the timer in the AP, the AP needs to remain in an active state and cannot sleep. However, in this embodiment of this application, the timer is implemented in Sensorhub, the AP does not need to remain in the active state, and the AP may enter a sleep state. Power consumption of the timer implemented in Sensorhub is lower.

Based on the foregoing embodiments, this application provides a short-range scanning method, applied to a first electronic device. The first electronic device includes a first short-range communication module, a main processor, and a second processor. The method includes steps S701 to S705.

S701: The main processor sends a first instruction to the second processor.

S702: The first instruction instructs the second processor to perform packet filtering based on a first filter condition, where the first filter condition is used to filter a packet from a device of a first service, and the device of the first service includes a first device.

S703: The first short-range communication module obtains, through scanning, a first packet sent by the first device.

S704: The first short-range communication module sends the first packet to the second processor.

S705: When the second processor determines that the first packet matches the first filter condition in the second processor, the second processor sends the first packet to the main processor.

In this embodiment of this application, the first electronic device may include the electronic device 100, the first short-range communication module may include the chip, and the second processor may include the microprocessor. In some embodiments, the first service may include the cloud scanning service 1 of the beacon. The first instruction may include the instruction 3. The first device may include the beacon device 200. The first filter condition may include the filter condition 1. The first packet may include the Bluetooth packet 1. In some embodiments, the first service may include the local scanning service 1 of the beacon. The first instruction may include the instruction 6. The first device may include the beacon device 400. The first filter condition may include the filter condition 2. The first packet may include the Bluetooth packet 2.

In some embodiments, the method further includes: The first short-range communication module obtains, through scanning, a second packet sent by a second device; the first short-range communication module sends the second packet to the second processor; and when the second processor determines that the second packet does not match the first filter condition in the second processor, the second processor does not send the first packet to the main processor. For example, the second device is a beacon device of a beacon scanning service that is not subscribed to by the electronic device 100. For example, the second device is a Bluetooth device of a non-beacon scanning service.

In some embodiments, the method further includes: The second processor sends a second instruction to the first short-range communication module based on the first instruction, where the second instruction instructs the first short-range communication module to send a packet obtained through scanning to the second processor.

In some embodiments, the method further includes: The second processor sends a second instruction to the first short-range communication module based on the first instruction, where the second instruction instructs the first short-range communication module to send a packet of a first-type service obtained through scanning to the second processor, and the first service belongs to the first-type service.

In this embodiment of this application, the first-type service may include the beacon scanning service. In some embodiments, the first service may include the cloud scanning service 1 of the beacon, and the second instruction may include the instruction 4. In some embodiments, the first service may include the local scanning service 1 of the beacon, and the second instruction may include the instruction 7.

In some embodiments, before the first short-range communication module sends the first packet to the second processor, the method further includes: The main processor sends a second filter condition to the first short-range communication module, where the second filter condition is used to filter a packet from a device of the first-type service. That the first short-range communication module sends the first packet to the second processor includes: The first short-range communication module sends the first packet to the second processor when determining that the first packet meets the second filter condition. In this embodiment of this application, the second filter condition may include the filter condition 4.

In some embodiments, before the second processor sends the first packet to the main processor, the method further includes: The main processor sends a callback condition to the second processor, where the callback condition indicates the second processor to send the first packet to the main processor when the first packet meets the callback condition. In this embodiment of this application, the callback condition may include the callback condition 1 or the callback condition 2.

In some embodiments, the callback condition of the first packet includes any one of the following: The first packet is received for the first time; or the first packet is not received for the first time, and a time interval between a time at which the first packet is received this time and a time at which the first packet sent to the main processor most recently is received is greater than a first time threshold. In this embodiment of this application, the first time threshold may include the time threshold 1.

In some embodiments, the first packet includes a device identifier of the first device, and the method further includes: The main processor obtains, from a server based on the device identifier of the first device, a first message attachment associated with the first device; and a first application on the main processor performs a first preset function based on message content in the first message attachment. In this embodiment of this application, the device identifier of the first device may include a beacon ID of the first device, the first service may include the cloud scanning service 1 of the beacon, the first message attachment may include the message attachment 1, and the first preset function may include the preset function 1.

In some embodiments, the first packet includes a device identifier of the first device, and the method further includes: The main processor performs a second preset function based on the device identifier of the first device. In this embodiment of this application, the device identifier of the first device may include a beacon ID of the first device, the first service may include the local scanning service 1 of the beacon, and the second preset function may include the preset function 2.

In some embodiments, after the second processor sends the first packet to the main processor, the method further includes: The second processor detects that a packet of the first device is not received again within first preset duration after the packet of the first device is received, and the second processor sends a loss event of the first device to the main processor. In this embodiment of this application, the first preset duration may include the preset duration 1.

In some embodiments, the first short-range communication module is a Bluetooth chip, the first service is a first beacon scanning service of the first application, and the first device is a registered beacon device of the first beacon scanning service. In this embodiment of this application, the first application may include the APP 1, and the first beacon scanning service may include the cloud scanning service 1 or the local scanning service 1.

In some embodiments, the method further includes: The main processor sends a first request message to the server, where the first request message carries a beacon parameter of the first beacon scanning service, and the first request message is used to detect validity of the beacon parameter; and when the beacon parameter is valid, the main processor receives a first response message sent by the server, where the first response message carries the first filter condition.

In some embodiments, the second filter condition includes that the packet carries a beacon device type.

In some embodiments, the device identifier of the first device includes a first beacon ID, a cloud server stores one or more message attachments associated with the first beacon ID; and that the main processor obtains, from the server based on the device identifier of the first device, a first message attachment associated with the first device includes: The main processor sends a second request message to the server, where the second request message includes the first beacon ID, and the second request message is used to query for the message attachment associated with the first beacon ID; and the main processor receives the first message attachment sent by the server, where the first message attachment is any one of the one or more message attachments.

In this embodiment of this application, the first service may include the cloud scanning service 1, the first request message may include the request message 1, the first response message may include the response message 2, the second request message may include the request message 2, and the first beacon ID may include the beacon ID 1 of the beacon device 200.

In some embodiments, the first filter condition indicates a value of one or more of the following filter fields of the first beacon scanning service: a namespace, a message type, a beacon ID prefix, and message content. That the first packet matches the first filter condition includes: The first packet carries a first filter field, the first filter field carried in the first packet matches the first filter field indicated by the first filter condition, and the first filter field is any filter field indicated by the first filter condition.

In some embodiments, the device identifier of the first device includes the first beacon ID, and the first application stores a correspondence between the first beacon ID and the second preset function. That the main processor performs the second preset function based on the device identifier of the first device includes: The first application on the main processor performs, based on the correspondence, the second preset function corresponding to the first beacon ID.

In some embodiments, the first filter condition indicates the first beacon ID of the first device. That the first packet matches the first filter condition includes: The beacon ID carried in the first packet is the first beacon ID.

In this embodiment of this application, the first service may include the local scanning service 1, the first beacon ID may include the beacon ID 2 of the beacon device 400, the second preset function may include the preset function 2, and the first filter condition may include the filter condition 2.

The following describes an example of a structure of an electronic device 100 in embodiments of this application.

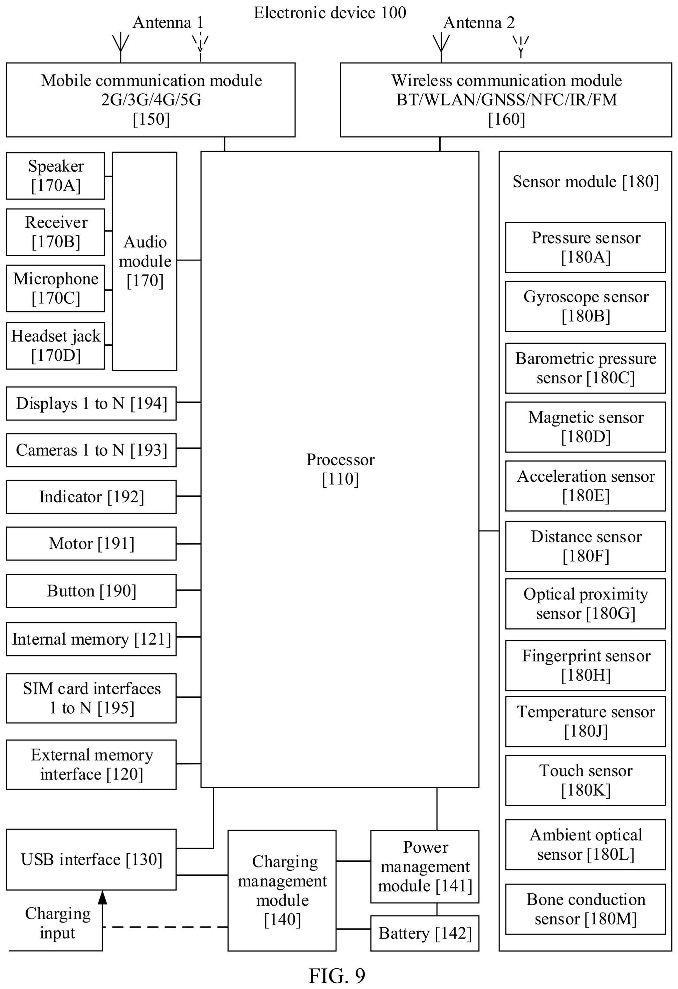

FIG. 9 is a diagram of a structure of the electronic device 100. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or a combination of a part of the components, or splits from a part of the components, or an arrangement of different components. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data that has been used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus, and includes a serial data line (serial data line, SDA) and a serial clock line (derail clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used to perform audio communication, and sample, quantize, and code an analog signal. In some embodiments, the audio module 170 may be coupled to the wireless communication module 160 through a PCM bus interface. In some embodiments, the audio module 170 may alternatively transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component like the display 194 or the camera 193. The MIPI interface includes a camera serial interface (camera serial interface, CSI), a display serial interface (display serial interface, DSI), and the like. In some embodiments, the processor 110 communicates with the camera 193 through the CSI, to implement a photographing function of the electronic device 100. The processor 110 communicates with the display 194 through the DSI, to implement a display function of the electronic device 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as the I2C interface, the I2S interface, the UART interface, the MIPI interface, or the like.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to transmit data between the electronic device 100 and a peripheral device, or may be configured to connect to a headset for playing audio through the headset. The interface may be further configured to connect to another electronic device like an AR device.

It may be understood that an interface connection relationship between the modules that is shown in this embodiment of the present disclosure is merely an example for description, and does not constitute a limitation on a structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. The charging management module 140 supplies power to the electronic device through the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by an audio device (which is not limited to the speaker 170A, the receiver 170B, or the like), or displays an image or a video by the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the electronic device 100, and that includes a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave through the antenna 2, performs demodulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled to each other, and the antenna 2 and the wireless communication module 160 in the electronic device 100 are coupled to each other, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or a satellite based augmentation system (satellite based augmentation systems, SBAS).

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a mini-LED, a micro-LED, a micro-OLED, a quantum dot light emitting diode (quantum dot light emitting diodes, QLED), or the like. In some embodiments, the electronic device 100 may include one or N displays 194, where N is a positive integer greater than 1.

The electronic device 100 may implement a photographing function through the ISP, the camera 193, the video codec, the GPU, the display 194, the application processor and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, and brightness of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation on frequency energy.

The video codec is configured to compress or decompress a digital video. The electronic device 100 may support one or more video codecs. In this way, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information by referring to a structure of a biological neural network, for example, a transfer mode between human brain neurons, and may further continuously perform self-learning. Applications such as intelligent cognition of the electronic device 100 may be implemented through the NPU, for example, image recognition, facial recognition, speech recognition, and text understanding.

The internal memory 121 may be one or more random access memories (random access memory, RAM), and one or more non-volatile memories (non-volatile memory, NVM).

The random access memory may include a static random access memory (static random access memory, SRAM), a dynamic random access memory (dynamic random access memory, DRAM), a synchronous dynamic random access memory (synchronous dynamic random access memory, SDRAM), a double data rate synchronous dynamic random access memory (double data rate synchronous dynamic random access memory, DDR SDRAM, such as a 5th generation DDR SDRAM generally referred to as DDR5 SDRAM), or the like. The non-volatile memory may include a magnetic disk storage device and a flash memory (flash memory).

The flash memory may be classified, based on an operation principle, into an NOR flash, an NAND flash, a 3D NAND flash, and the like; may be classified, based on a quantity of electric potential levels of a cell, into a single-level cell (single-level cell, SLC), a multi-level cell (multi-level cell, MLC), a triple-level cell (triple-level cell, TLC), a quad-level cell (quad-level cell, QLC), and the like; or the flash memory may be classified, based on storage specifications, into a universal flash storage (English: universal flash storage, UFS), an embedded multimedia memory (embedded multimedia Card, eMMC), and the like.

The random access memory may be directly read and written by using the processor 110. The random access memory may be configured to store an executable program (for example, machine instructions) in an operating system or another running program, and may be further configured to store data of a user, data of an application, and the like.

The nonvolatile memory may store an executable program, data of a user and an application, and the like, and may be loaded into the random access memory in advance, so that the processor 110 directly performs reading and writing.

The external memory interface 120 may be configured to connect to an external non-volatile memory, to expand a storage capability of the electronic device 100. The external non-volatile memory communicates with the processor 110 through the external memory interface 120, to implement a data storage function. For example, a file like music or a video is stored in the external nonvolatile memory.

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to code and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device 100 may be used to listen to music or answer a call in a hands-free mode over the speaker 170A.

The receiver 170B, also referred to as an "earpiece", is configured to convert an audio electrical signal into a sound signal. When a call is answered or speech information is received through the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C.

The headset jack 170D is configured to connect to a wired headset. The headset jack 170D may be a USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor.

The gyroscope sensor 180B may be configured to determine a moving posture of the electronic device 100. In some embodiments, an angular velocity of the electronic device 100 around three axes (namely, axes x, y, and z) may be determined through the gyroscope sensor 180B. The gyroscope sensor 180B may be configured to implement image stabilization during photographing.

The barometric pressure sensor 180C is configured to measure barometric pressure. In some embodiments, the electronic device 100 calculates an altitude through barometric pressure measured by the barometric pressure sensor 180C, to assist in positioning and navigation.

The magnetic sensor 180D includes a Hall sensor. The electronic device 100 may detect opening and closing of a flip cover via the magnetic sensor 180D.

The acceleration sensor 180E may detect accelerations in various directions (usually on three axes) of the electronic device 100.

The distance sensor 180F is configured to measure a distance. The electronic device 100 may measure the distance in an infrared manner or a laser manner.

The optical proximity sensor 180G may include, for example, a light emitting diode (LED) and an optical detector, for example, a photodiode. The light emitting diode may be an infrared light emitting diode.

The ambient light sensor 180L is configured to sense ambient light brightness. The electronic device 100 may adaptively adjust brightness of the display 194 based on the sensed ambient light brightness.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy through the temperature detected by the temperature sensor 180J.

The touch sensor 180K is also referred to as a "touch component". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer a detected touch operation to the application processor to determine a touch event type. A visual output related to the touch operation may be provided through the display 194. In some other embodiments, the touch sensor 180K may alternatively be disposed on a surface of the electronic device 100 at a location different from that of the display 194.

The bone conduction sensor 180M may obtain a vibration signal. In some embodiments, the bone conduction sensor 180M may obtain a vibration signal of a vibration bone of a human vocal-cord part.

The button 190 includes a power button, a volume button, and the like. The button 190 may be a mechanical button, or may be a touch button. The electronic device 100 may receive a button input, and generate a key signal input related to a user setting and function control of the electronic device 100.

The motor 191 may generate a vibration prompt. The motor 191 may be configured to provide an incoming call vibration prompt and a touch vibration feedback.

The indicator 192 may be an indicator light, and may be configured to indicate a charging status and a power change, or may be configured to indicate a message, a missed call, a notification, and the like.

The SIM card interface 195 is configured to connect to a SIM card.

Implementations of this application may be randomly combined to achieve different technical effect.

All or some of the foregoing embodiments may be implemented by using software, hardware, firmware, or any combination thereof. When software is used to implement embodiments, all or a part of the embodiments may be implemented in a form of a computer program product. The computer program product includes one or more computer instructions. When the computer program instructions are loaded and executed on the computer, the procedure or functions according to this application are all or partially generated. The computer may be a general-purpose computer, a special-purpose computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like.

A person of ordinary skill in the art may understand that all or some of the processes of the methods in embodiments may be implemented by a computer program instructing relevant hardware. The program may be stored in a computer-readable storage medium. When the program is run, the processes of the methods in embodiments are performed. The foregoing storage medium includes any medium that can store program code, such as a ROM, a random access memory RAM, a magnetic disk, or an optical disc.

In conclusion, the foregoing descriptions are merely example embodiments of the technical solutions of the present invention, and are not intended to limit the protection scope of the present invention. Any modification, equivalent replacement, improvement, or the like made in accordance with the disclosure of the present invention shall be included in the protection scope of the present invention.

## Claims

1. A short-range scanning method, applied to a first electronic device, wherein the first electronic device comprises a first short-range communication module, a main processor, and a second processor; and the method comprises:
sending, by the main processor, a first instruction to the second processor, wherein the first instruction instructs the second processor to perform packet filtering based on a first filter condition, the first filter condition is used to filter a packet from a device of a first service, and the device of the first service comprises a first device;
obtaining, by the first short-range communication module through scanning, a first packet sent by the first device;
sending, by the first short-range communication module, the first packet to the second processor; and
when the second processor determines that the first packet matches the first filter condition in the second processor, sending, by the second processor, the first packet to the main processor.

2. The method according to claim 1, wherein the method further comprises:
obtaining, by the first short-range communication module through scanning, a second packet sent by a second device;
sending, by the first short-range communication module, the second packet to the second processor; and
when the second processor determines that the second packet does not match the first filter condition in the second processor, skipping sending, by the second processor, the first packet to the main processor.

3. The method according to claim 1, wherein the method further comprises:
sending, by the second processor, a second instruction to the first short-range communication module based on the first instruction, wherein the second instruction instructs the first short-range communication module to send a packet obtained through scanning to the second processor.

4. The method according to claim 1, wherein the method further comprises:
sending, by the second processor, a second instruction to the first short-range communication module based on the first instruction, wherein the second instruction instructs the first short-range communication module to send a packet of a first-type service obtained through scanning to the second processor, and the first service belongs to the first-type service.

5. The method according to claim 1 or 4, wherein before sending, by the first short-range communication module, the first packet to the second processor, the method further comprises:
sending, by the main processor, a second filter condition to the first short-range communication module, wherein the second filter condition is used to filter a packet from a device of the first-type service; and
sending, by the first short-range communication module, the first packet to the second processor comprises:
when determining that the first packet meets the second filter condition, sending, by the first short-range communication module, the first packet to the second processor.

6. The method according to claim 1, wherein before sending, by the second processor, the first packet to the main processor, the method further comprises:
sending, by the main processor, a callback condition to the second processor, wherein the callback condition indicates the second processor to send the first packet to the main processor when the first packet meets the callback condition.

7. The method according to claim 6, wherein the callback condition of the first packet comprises any one of the following: the first packet is received for the first time; or the first packet is not received for the first time, and a time interval between a time at which the first packet is received this time and a time at which the first packet sent to the main processor most recently is received is greater than a first time threshold.

8. The method according to claim 1, wherein the first packet comprises a device identifier of the first device; and the method further comprises:
obtaining, by the main processor from a server based on the device identifier of the first device, a first message attachment associated with the first device; and
performing, by a first application on the main processor, a first preset function based on message content in the first message attachment.

9. The method according to claim 1, wherein the first packet comprises a device identifier of the first device; and the method further comprises:
performing, by the main processor, a second preset function based on the device identifier of the first device.

10. The method according to claim 1, wherein after sending, by the second processor, the first packet to the main processor, the method further comprises:
when the second processor detects that a packet of the first device is not received again within first preset duration after the packet of the first device is received, sending, by the second processor, a loss event of the first device to the main processor.

11. The method according to any one of claims 1 to 10, wherein the first short-range communication module is a Bluetooth chip, the first service is a first beacon scanning service of the first application, and the first device is a registered beacon device of the first beacon scanning service.

12. The method according to claim 11, wherein the method further comprises:
sending, by the main processor, a first request message to the server, wherein the first request message carries a beacon parameter of the first beacon scanning service, and the first request message is used to detect validity of the beacon parameter; and
when the beacon parameter is valid, receiving, by the main processor, a first response message sent by the server, wherein the first response message carries the first filter condition.

13. The method according to claim 11, wherein the second filter condition comprises that the packet carries a beacon device type.

14. The method according to claim 11, wherein the device identifier of the first device comprises a first beacon ID, and the cloud server stores one or more message attachments associated with the first beacon ID; and obtaining, by the main processor from the server based on the device identifier of the first device, a first message attachment associated with the first device comprises:
sending, by the main processor, a second request message to the server, wherein the second request message comprises the first beacon ID, and the second request message is used to query for the message attachment associated with the first beacon ID; and
receiving, by the main processor, the first message attachment sent by the server, wherein the first message attachment is any one of the one or more message attachments.

15. The method according to claim 14, wherein the first filter condition indicates a value of one or more of the following filter fields of the first beacon scanning service: a namespace, a message type, a beacon ID prefix, and message content; and that the first packet matches the first filter condition comprises: the first packet carries a first filter field, the first filter field carried in the first packet matches the first filter field indicated by the first filter condition, and the first filter field is any filter field indicated by the first filter condition.

16. The method according to claim 11, wherein the device identifier of the first device comprises a first beacon ID, and the first application stores a correspondence between the first beacon ID and the second preset function; and performing, by the main processor, the second preset function based on the device identifier of the first device comprises:
performing, by the first application on the main processor based on the correspondence, the second preset function corresponding to the first beacon ID.

17. The method according to claim 16, wherein the first filter condition indicates the first beacon ID of the first device; and that the first packet matches the first filter condition comprises: a beacon ID carried in the first packet is the first beacon ID.

18. A terminal device, comprising a memory and a processor, wherein the memory and the processor are electrically coupled to each other, the memory is configured to store program instructions, and the processor is configured to invoke all or a part of the program instructions stored in the memory, to perform the method according to any one of claims 1 to 17.

19. A computer storage medium, comprising computer instructions, wherein when the computer instructions are run on a terminal device, the terminal device is enabled to perform the method according to any one of claims 1 to 17.
